(19) Europäisches Patentamt
European Patent Office
Office européen des brevets

(11) **EP 4 775 411 A1**

(12) **EUROPEAN PATENT APPLICATION**

(43) Date of publication:
**15.07.2026 Bulletin 2026/29**

(21) Application number: **25220719.6**

(22) Date of filing: **04.12.2025**

(51) International Patent Classification (IPC):
***B60C 1/00*** *(2006.01)* ***B60C 9/20*** *(2006.01)*
***B60C 9/28*** *(2006.01)* ***B60C 11/03*** *(2006.01)*
***B60C 11/12*** *(2006.01)* ***B60C 11/13*** *(2006.01)*
***B60C 9/22*** *(2006.01)*

(52) Cooperative Patent Classification (CPC):
**B60C 1/0016; B60C 9/2006; B60C 9/2204; B60C 9/28; B60C 11/0306; B60C 11/12; B60C 11/1218; B60C 11/13;** B60C 2009/2016; B60C 2011/0348; B60C 2011/1213; B60C 2200/06

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.01.2025 JP 2025002779**

(71) Applicant: **Sumitomo Rubber Industries, Ltd.**
**Kobe-shi, Hyogo 651-0072 (JP)**

(72) Inventors:
- **HISAJIMA, Hana**
  **Kobe-shi, 651-0072 (JP)**
- **KAGIMOTO, Shuji**
  **Kobe-shi, 651-0072 (JP)**
- **KASAI, Yuki**
  **Kobe-shi,, 651-0072 (JP)**

(74) Representative: **Manitz Finsterwald**
**Patent- und Rechtsanwaltspartnerschaft mbB**
**Martin-Greif-Straße 1**
**80336 München (DE)**

(54) **HEAVY DUTY TIRE**

(57) A tire 2 includes a tread 4 and a reinforcing layer 14. The tread 4 includes a rubber composition containing a rubber component and a filler. The rubber component contains SBR and isoprene-based rubber. The filler contains carbon black and silica. The reinforcing layer 14 includes a reference full band BF. An amount CNR of the isoprene-based rubber, an amount BCB of the carbon black, and a ratio (Wj/Wt) of an axial width Wj of the reference full band BF to an axial width Wt of the tread 4 satisfy the following relational expression.

$$(CNR + BCB) \times (Wj/Wt) \geq 27.0$$

FIG. 1

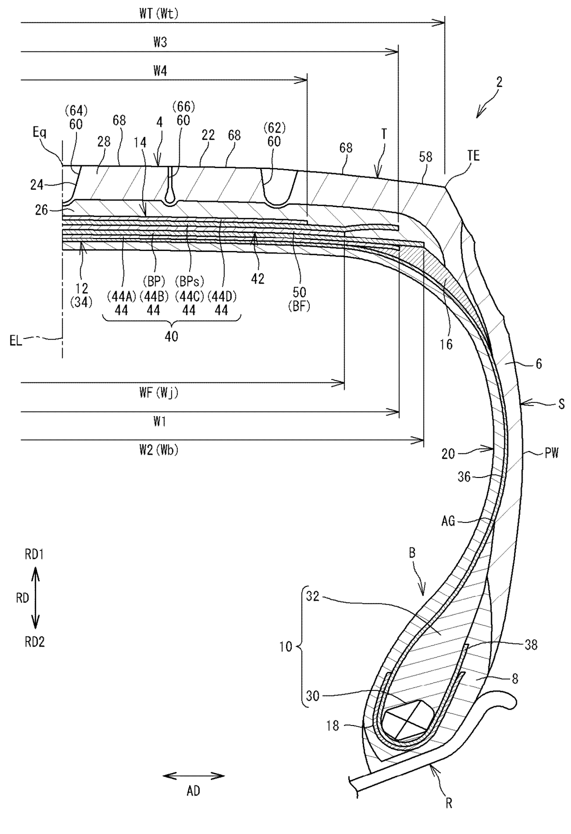


EP 4 775 411 A1

## Description

[REFERENCE TO RELATED APPLICATION]

The present application claims priority based on Japanese Patent Application No. 2025-002779 filed on January 8, 2025, and entire contents of this Japanese Patent Application are incorporated herein by reference.

## TECHNICAL FIELD

The present invention relates to a heavy duty tire.

## BACKGROUND ART

For tires, further improvement is required in low fuel consumption performance based on low rolling resistance and running performance on a wet road surface (hereinafter, referred to as wet performance) from the viewpoint of environmental consideration and safety. In addition to improvement in the above performance, good wear resistance performance is also required for heavy duty tires.

In order to improve low fuel consumption performance, wet performance, and wear resistance performance, for example, Japanese Laid-Open Patent Publication No. 2023-013934 (PATENT LITERATURE 1) proposes to set an ash content ratio of a tread including a rubber composition containing isoprene-based rubber and styrene butadiene rubber as rubber components to a predetermined amount or more, and form a flask-like circumferential groove in the tread.

## SUMMARY OF THE INVENTION

[TECHNICAL PROBLEM]

An object of the present invention is to provide a heavy duty tire capable of achieving improvement in wet performance and wear resistance performance while maintaining low rolling resistance.

[SOLUTION TO PROBLEM]

A heavy duty tire according to the present invention includes a pair of beads, a carcass that extends between the pair of beads, a tread that is positioned radially outside the carcass and is configured to come into contact with a road surface, and a reinforcing layer that is positioned radially between the tread and the carcass. The tread is formed from a rubber composition containing a rubber component and a filler. The rubber component includes a styrene butadiene rubber and an isoprene-based rubber. The filler includes carbon black and silica. The reinforcing layer includes a belt having a plurality of belt cords arranged in parallel, and includes a band having a band cord that is helically wound. The band includes at least one full band composed of a band strip that is helically wound. Among the at least one full band, a full band having a widest axial width is defined as a reference full band. A material of the band cord in the reference full band is steel. The amount CSBR of the styrene butadiene rubber in 100 parts by mass of the rubber component is not less than 40 parts by mass. The amount CNR of the isoprene-based rubber in 100 parts by mass of the rubber component is not less than 30 parts by mass. The amount BCB of the carbon black per 100 parts by mass of the rubber component is smaller than the amount BSi of the silica per 100 parts by mass of the rubber component. The amount CNR of the isoprene-based rubber, the amount BCB of the carbon black, and the ratio (Wj/Wt) of the axial width Wj of the reference full band to the axial width Wt of the tread satisfy the following relational expression.

$$(CNR + BCB) \times (Wj/Wt) \geq 27.0$$

[ADVANTAGEOUS EFFECTS OF THE INVENTION]

The present invention can provide a heavy duty tire capable of achieving improvement in wet performance and wear resistance performance while maintaining low rolling resistance.

## BRIEF DESCRIPTION OF DRAWINGS

FIG. 1 is a sectional view showing a part of a heavy duty tire according to an embodiment of the present invention,

FIG. 2 is a schematic view illustrating a configuration of a reinforcing layer,

FIG. 3 is a perspective view illustrating a part of a band strip,

FIG. 4 is a plan view illustrating a full band,

FIG. 5 is a side view illustrating a full band,

FIG. 6 shows a part of the section of FIG. 1,

FIG. 7 is a developed view showing a part of a tread,

FIG. 8 is a sectional view taken along the line VIII-VIII in FIG. 7,

FIG. 9 is a sectional view taken along the line IX-IX in FIG. 7,

FIG. 10 is a sectional view showing a circumferential narrow groove according to a variation,

FIG. 11 is a sectional view taken along the line XI-XI in FIG. 7, and

FIG. 12 is a developed view showing a transverse sipe according to a variation.

## DETAILED DESCRIPTION

Description is made in detail hereinafter to a preferred embodiment of the present invention with reference to the drawings as appropriate.

A tire of the present invention is fitted on a rim. The inside of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a normal rim, the internal pressure of the tire is adjusted to a normal internal pressure, and no load is applied to the tire is referred to as a normal state.

In the present invention, unless otherwise specified, the dimensions and angles of each component of the tire are measured in the normal state.

The dimensions and angles of each component in a meridian cross-section of the tire, which cannot be measured in a state where the tire is fitted on the normal rim, are measured in a cut plane of the tire obtained by cutting the tire along a plane including a rotation axis. In this measurement, the tire is set such that the distance between right and left beads is equal to the distance between the beads in the tire that is fitted on the normal rim. The configuration of the tire that cannot be confirmed in a state where the tire is fitted on the normal rim is confirmed in the above-described cut plane.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are normal internal pressures.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

The present invention refers to a crosslinked rubber as a crosslinked product of a rubber composition obtained by pressurizing and heating the rubber composition. The rubber composition is a material obtained by mixing a rubber component and a chemical such as a filler in a kneader such as a Banbury mixer.

The "styrene amount" according to the present invention is a value calculated through NMR measurement, pyrolysis gas chromatography, infrared absorption spectrum analysis, or the like, and is applied to a rubber component having a repeating unit derived from a styrene such as SBR. The "styrene amount" adopts a unit of "% by mass".

Similarly to the "styrene amount" described above, the "vinyl amount (1,2-bond butadiene unit amount)" according to the present invention is a value calculated through NMR measurement, pyrolysis gas chromatography, infrared absorption spectrum analysis, or the like, and is applied to a rubber component having a repeating unit derived

from a butadiene such as SBR or BR. The "vinyl amount" adopts a unit of "% by mole".

The present invention represents, as a cord count (unit: ends/50 mm), the number of cords included per 50 mm width of a tire element including parallelly arranged cords. Unless otherwise specified, the cord count is obtained in a cut plane of an element cut along a plane perpendicular to a cord length direction. An element including a helically wound cord also appears to include a plurality of cords arranged parallelly, so that its cord count can be obtained similarly to the tire element including the parallelly arranged cords.

In the present invention, a tread portion of a tire is a part of the tire which comes into contact with a road surface. A bead portion is a part of the tire which is fitted to a rim. A sidewall portion is a part of the tire which extends between the tread portion and the bead portion. A tire includes parts such as a tread portion, a pair of bead portions, and a pair of sidewall portions.

The tread portion includes a tread as a constituent element of the tire. The sidewall portions each include a sidewall as another constituent element of the tire. The bead portions each include a bead as still another constituent element of the tire.

A center portion of the tread portion is also referred to as crown portion. A portion at an end of the tread portion is also referred to as shoulder portion.

[Findings Supporting the Present Invention]

An increase in the proportion of styrene butadiene rubber (hereinafter, referred to as SBR) in a rubber component of a rubber composition included in a tread shifts the glass transition temperature (hereinafter, referred to as Tg) of the rubber component to the high temperature side, and improves the road surface following property in a micro-deformation region. The tire can be improved in wet performance. However, the amount of SBR affects the energy loss of the tread. An increase in the amount of SBR may cause an increase in the energy loss of the tread and an increase in the rolling resistance of the tire.

The rubber composition contains carbon black and silica as fillers. If the composition of the rubber composition is adjusted so that silica is contained more than carbon black, the tire is expected to be improved in wet performance while maintaining low rolling resistance. However, an increase in the amount of silica may cause deterioration of wear resistance performance.

Therefore, the present inventors have intensively studied a technique capable of achieving improvement in wet performance and wear resistance performance while maintaining low rolling resistance, and completed the present invention described below.

[Overview of Embodiment of the Present Invention]

The present invention is a heavy duty tire including a pair of beads, a carcass that extends between the pair of beads, a tread that is positioned radially outside the carcass and is configured to come into contact with a road surface, and a reinforcing layer that is positioned radially between the tread and the carcass, wherein the tread is formed from a rubber composition containing a rubber component and a filler, the rubber component includes a styrene butadiene rubber and an isoprene-based rubber, the filler includes carbon black and silica, the reinforcing layer includes a belt having a plurality of belt cords arranged in parallel and a band having a band cord helically wound, the band includes at least one full band composed of a band strip that is helically wound, among the at least one full band, a full band having a widest axial width is defined as a reference full band, a material of the band cord in the reference full band is steel, an amount CSBR of the styrene butadiene rubber in 100 parts by mass of the rubber component is not less than 40 parts by mass, an amount CNR of the isoprene-based rubber in 100 parts by mass of the rubber component is not less than 30 parts by mass, an amount BCB of the carbon black per 100 parts by mass of the rubber component is smaller than an amount BSi of the silica per 100 parts by mass of the rubber component, and the amount CNR of the isoprene-based rubber, the amount BCB of the carbon black, and a ratio (Wj/Wt) of an axial width Wj of the reference full band to an axial width Wt of the tread satisfy a following relational expression.

$$(\mathrm{CNR} + \mathrm{BCB}) \times (\mathrm{Wj}/\mathrm{Wt}) \geq 27.0$$

The heavy duty tire of the present invention can achieve improvement in wet performance and wear resistance performance while maintaining low rolling resistance. A mechanism of such an effect exhibited by the tire is not clarified, but is inferred as follows.

The rubber component of the rubber composition forming the tread contains styrene butadiene rubber (SBR). The amount CSBR of the SBR in 100 parts by mass of the rubber component is not less than 40 parts by mass. The Tg of the rubber component becomes high, and the road surface following property in a micro-deformation region is improved. The

tread of the tire can contribute to improvement in wet performance.

The rubber composition contains carbon black and silica as fillers. The amount BCB of the carbon black is smaller than the amount BSi of the silica. The amount BSi of the silica is large, and the amount BCB of the carbon black is small. The silica can contribute to suppressing an increase in energy loss caused by a rubber component containing a large amount of SBR. The tire can be improved in wet performance while maintaining low rolling resistance.

Silica contained in a large amount affects the wear resistance performance. However, the rubber component of the tread contains isoprene-based rubber. The amount CNR of the isoprene-based rubber in 100 parts by mass of the rubber component is not less than 30 parts by mass. The isoprene-based rubber increases the strength of the tread. Occurrence of wear due to the strength of the tread is suppressed.

The reinforcing layer includes the band, and the band includes the reference full band including a steel cord as a band cord. The reinforcing layer can contribute to suppressing the dimensional growth of the tire. A change in the ground-contact shape is suppressed. Occurrence of wear due to the change in the ground-contact shape is also suppressed.

Furthermore, in the tire, the amount CNR of the isoprene-based rubber, the amount BCB of the carbon black, and the ratio (Wj/Wt) are set to satisfy the above-described relational expression. Thus, the strength of the tread and the holding force by the reinforcing layer are effectively increased.

The tire can be improved in wear resistance performance in spite of the increase in the amount of silica that disadvantageously acts on the wear resistance performance.

The tire can achieve improvement in wet performance and wear resistance performance while maintaining low rolling resistance.

The ratio (Wj/Wt) of the axial width Wj of the reference full band to the axial width Wt of the tread is preferably not less than 0.60. In this case, the band can contribute to suppressing the dimensional growth of the tire. The tire can be further improved in wear resistance performance.

It is preferable that the belt includes at least one belt ply, among the at least one belt ply, a belt ply having a widest axial width is defined as a reference belt ply, a material of the belt cord in the reference belt ply is steel, and a ratio (Wb/Wt) of an axial width Wb of the reference belt ply to the axial width Wt of the tread is not less than 0.70. In this case, the belt can contribute to suppressing the dimensional growth of the tire. The tire can be further improved in wear resistance performance.

A ratio (Wj/Wb) of the axial width Wj of the reference full band to the axial width Wb of the reference belt ply is preferably not less than 0.60. In this case, the band can contribute to suppressing the dimensional growth of the tire. The tire can be further improved in wear resistance performance.

The reference full band and the reference belt ply are preferably arranged to be directly adjacent to each other radially. In this case, the reinforcing layer can contribute to suppressing the dimensional growth of the tire. The tire can be improved in wear resistance performance.

An inclination angle Aj of the band cord of the reference full band and an inclination angle Ab of the belt cord of the reference belt ply preferably satisfy the following relational expression.

$$Aj + Ab \leq 25$$

In this case, the reinforcing layer can contribute to suppressing the dimensional growth of the tire. The tire can be further improved in wear resistance performance.

A cord count Ej of the reference full band is preferably not less than 20. In this case, the band can contribute to suppressing the dimensional growth of the tire. The tire can be further improved in wear resistance performance.

It is preferable that the tread includes a plurality of circumferential grooves that are axially arranged, at least one of the plurality of circumferential grooves is a circumferential narrow groove, the circumferential narrow groove includes a body portion including a groove opening of the circumferential narrow groove and includes an enlarged width portion including a groove bottom of the circumferential narrow groove, the body portion includes a narrow groove portion, a maximum width of the enlarged width portion is larger than a minimum width of the narrow groove portion, and when the tread is in contact with a road surface and deformed, a pair of wall surfaces of the circumferential narrow groove are in contact with each other in the narrow groove portion. In this case, in the initial stage of wear, the narrow groove portion of the circumferential narrow groove contributes to suppressing deformation of the tread. The circumferential narrow groove apparently enhances the stiffness of the tread. The tire can be further improved in wear resistance performance while maintaining good wet performance. The enlarged width portion having a wide width is provided radially inside the narrow groove portion of the circumferential narrow groove. After the narrow groove portion disappears, the enlarged width portion is exposed. In the middle stage of wear in which the narrow groove portion disappears, the exposed enlarged width portion can contribute to suppressing deterioration of wet performance. The volume of the tread is reduced by wear. The deformation allowance of the tread is decreased, and thus the stiffness of the tread is apparently enhanced. Good wear resistance performance is maintained even in the middle stage of wear.

It is preferable that the tread includes a plurality of land portions separated by the plurality of circumferential grooves, at least one of the plurality of land portions includes a transverse sipe traversing the land portion, and the transverse sipe extends zigzag in a length direction or a depth direction. In this case, the transverse sipe can function as an edge component that contributes to exertion of traction. The tire can be further improved in wet performance. When the tread is deformed, the wall surfaces of the transverse sipe are in close contact with each other. The wall surfaces restrain each other to enhance the stiffness of the tread apparently. The tire can also be further improved in wear resistance performance.

The filler preferably contains silica having an average primary particle diameter not greater than 16 nm. This is because such silica can contribute to improvement in wear resistance performance.

The filler preferably contains carbon black having an average primary particle diameter not greater than 19 nm. This is because such carbon black can contribute to improvement in wear resistance performance.

It is preferable that the rubber composition further contains a silane coupling agent and the silane coupling agent contains a mercapto-based silane coupling agent. This is because such a silane coupling agent can contribute to improvement in wear resistance performance.

The styrene butadiene rubber preferably has a styrene content CSt of not greater than 25% by mass. In this case, the stiffness of the tread is appropriately maintained. The tire can maintain good wear resistance performance.

The rubber composition preferably further contains a resin component. In this case, the resin component imparts flexibility to the tread. The road surface following property in a micro-deformation region is improved. The tread of the tire can contribute to improvement in wet performance.

Thus, according to the present invention, a heavy duty tire is obtained that is capable of achieving improvement in wet performance and wear resistance performance while maintaining low rolling resistance. This is explained in detail below.

[Details of Embodiment of the Present Invention]

[Rubber Composition]

A tread is formed from a rubber composition. The tread is a crosslinked product of the rubber composition, that is, a crosslinked rubber. The following will describe the rubber composition for the tread. The rubber composition contains a rubber component and a filler.

[Rubber Component]

The rubber component includes a styrene butadiene rubber and an isoprene-based rubber. The rubber component includes a styrene butadiene rubber and an isoprene-based rubber, and may further includes another rubber component. Alternatively, the rubber component may include only a styrene butadiene rubber and an isoprene-based rubber.

[Styrene Butadiene Rubber]

The styrene butadiene rubber (SBR) is not particularly limited, and examples of the SBR include solution-polymerized SBRs (S-SBRs), emulsion-polymerized SBRs (E-SBRs), and modified SBRs thereof (modified S-SBRs and modified E-SBRs). Examples of modified SBRs include modified SBRs in which the terminals and/or the main chain thereof is modified, and modified SBRs coupled by using tin, a silicon compound, or the like (a condensate, one having a branch structure, etc.). Among them, S-SBRs and modified SBRs are preferable as SBRs included in the rubber component. Furthermore, hydrogenated products of these SBRs (hydrogenated SBRs), etc., can also be used as SBRs in this rubber composition. One of these SBRs may be selected and used alone, or two or more of these SBRs may be selected and used in combination.

The SBR has excellent viscoelastic properties in a region highly correlated with wet performance (specifically, grip performance on a wet road surface), and has excellent compatibility and reactivity with silica described later. The SBR is considered to be able to contribute to improvement of wet performance and wear resistance.

From the viewpoint of improving wet performance, the styrene content CSt of the SBR is preferably not less than 5% by mass, more preferably not less than 7% by mass, and still more preferably not less than 9% by mass. From the viewpoint of improving wear resistance performance, the styrene content CSt of the SBR is preferably not greater than 25% by mass, more preferably not greater than 18% by mass, and still more preferably not greater than 16% by mass.

The vinyl content CVi of the SBR is not less than 26% by mole. This is because if the vinyl content CVi is less than 26% by mole, it is difficult to improve wet performance and wear resistance to the degree required for tire performance. The vinyl content CVi is preferably not less than 27% by mole, more preferably not less than 28% by mole, still more preferably

not less than 29% by mole, and still even more preferably not less than 30% by mole. From the viewpoint of capability of contributing to improvement in wet performance and wear resistance performance, the vinyl content CVi of the SBR is preferably not greater than 45% by mole, more preferably not greater than 44% by mole, still more preferably not greater than 43% by mole, and still more preferably not greater than 42% by mole.

From the viewpoint of improving wet performance, the glass transition temperature (Tg) of the SBR is preferably not lower than -80°C, more preferably not lower than -70°C, and further preferably not lower than -65°C. From the viewpoint of reducing rolling resistance, the Tg of the SBR is preferably not higher than -40°C, more preferably not higher than -45°C, further preferably not higher than -50°C, and further preferably not higher than -55°C. The Tg of the SBR is obtained by performing differential scanning calorimetry (DSC) in accordance with JIS K7121 for "pure SBR content" obtained by removing elongation oil using acetone in accordance with JIS K6229.

From the viewpoint of improving wear resistance, the weight-average molecular weight (Mw) of the SBR is preferably not less than 100 thousand, more preferably not less than 150 thousand, and further preferably not less than 190 thousand. From the viewpoint of crosslinking uniformity, etc., the Mw of the SBR is preferably not greater than 2.5 million, more preferably not greater than 2 million, and further preferably not greater than 1 million. The Mw of the SBR can be obtained by conversion, based on a polystyrene standard, of a value measured by gel permeation chromatography (GPC) (e.g., GPC-8000 series manufactured by Tosoh Corporation, detector: differential refractometer, column: TSKGEL SUPERMULTIPORE HZ-M manufactured by Tosoh Corporation).

The amount CSBR of the SBR in 100 parts by mass of the rubber component is not less than 40 parts by mass. Thus, the wet performance is improved. From this viewpoint, the amount CSBR of the SBR in 100 parts by mass of the rubber component is preferably not less than 45 parts by mass, and more preferably not less than 50 parts by mass. From the viewpoint of improving wet performance and wear resistance performance, the amount CSBR of the SBR is preferably not greater than 70 parts by mass, more preferably not greater than 65 parts by mass, and still more preferably not greater than 60 parts by mass.

[Isoprene-Based Rubber]

Examples of the isoprene-based rubber include natural rubber (NR), polyisoprene rubber (IR), reformed NR, modified NR, and modified IR. As the NR, for example, NRs that are generally used in the tire industry, such as SIR20, RSS#3, and TSR20, can be used. The IR is not particularly limited, and, as the IR, for example, IRs that are generally used in the tire industry, such as IR2200, can be used. Examples of the reformed NR include deproteinized natural rubber (DPNR) and ultra-pure natural rubber (UPNR), examples of the modified NR include epoxidized natural rubber (ENR), hydrogenated natural rubber (HNR), and grafted natural rubber, and examples of the modified IR include epoxidized isoprene rubber, hydrogenated isoprene rubber, and grafted isoprene rubber. These rubbers may be used individually, or two or more of these rubbers may be used in combination. Among them, NR is preferable.

The amount CNR of the isoprene-based rubber in 100 parts by mass of the rubber component is not less than 30 parts by mass. Thus, the strength of the tread is increased, and the wear resistance performance is improved. From this viewpoint, the amount CNR of the isoprene-based rubber in 100 parts by mass of the rubber component is preferably not less than 35 parts by mass, and more preferably not less than 40 parts by mass. From the viewpoint of maintaining good wet performance, the amount CNR is preferably not greater than 70 parts by mass, more preferably not greater than 65 parts by mass, and still more preferably not greater than 60 parts by mass.

As described above, the rubber component can contain a rubber component other than the SBR and the isoprene-based rubber. As the rubber component other than the SBR and the isoprene-based rubber, a crosslinkable rubber component generally used in the tire industry can be used. Examples of such a rubber component include butadiene rubber (BR), styrene-isoprene-butadiene copolymer rubber (SIBR), styrene-isobutylene-styrene block copolymer (SIBS), chloroprene rubber (CR), acrylonitrile-butadiene rubber (NBR), hydrogenated nitrile rubber (HNBR), butyl rubber (IIR), ethylene-propylene rubber, polynorbornene rubber, silicone rubber, polyethylene chloride rubber, fluororubber (FKM), acrylic rubber (ACM), and hydrin rubber. One of these other rubber components may be selected and used alone, or two or more of these other rubber components may be selected and used in combination.

The rubber component of the rubber composition for the tread may contain BR as a rubber component other than the SBR and the isoprene-based rubber.

[Butadiene Rubber]

The butadiene rubber (BR) is not particularly limited, and, for example, BRs that are generally used in the tire industry, such as a BR having a cis content of less than 50% by mass (low-cis BR), a BR having a cis content of not less than 90% by mass (high-cis BR), a rare-earth element-based butadiene rubber synthesized using a rare-earth element-based catalyst (rare-earth element-based BR), a BR containing syndiotactic polybutadiene crystals (SPB-containing BR), and modified BRs (high-cis modified BR, low-cis modified BR), can be used. These BRs may be used individually, or two or

more of these BRs may be used in combination. The cis content of the BR is a value calculated by infrared absorption spectrometry.

In a case where the rubber component contains BR, the amount CBR of the BR in 100 parts by mass of the rubber component is preferably not greater than 20 parts by mass, more preferably not greater than 10 parts by mass, and still more preferably not greater than 5 parts by mass from the viewpoint of maintaining good wet performance and wear resistance performance. The amount CBR of the BR may be 0 parts by mass.

[Filler]

As described above, the rubber composition for the tread contains a filler, and the filler includes carbon black and silica. In other words, the rubber composition contains carbon black and silica as a filler. The filler may alternatively include only carbon black and silica. In other words, the rubber composition may contain the filler composed of only carbon black and silica.

[Carbon Black]

The carbon black is not particularly limited, and, for example, carbon blacks that can be generally used in the tire industry, such as GPF, FEF, HAF, ISAF, and SAF, can be used. In addition, from the viewpoint of reducing environmental load and from the viewpoint of being able to reduce friction between the carbon black surface and a rubber molecular chain to suppress heat generation, recycled carbon black (rCB) obtained from the pyrolysis of used tires can also be used for the tire. These carbon blacks may be used individually, or two or more of these carbon blacks may be used in combination

In the present invention, to distinguish from recycled carbon black (rCB), the above-described carbon blacks that can be generally used in the tire industry, such as GPF, FEF, HAF, ISAF, and SAF, are also referred to as standard carbon black (sCB).

Recycled carbon black can be obtained from the pyrolysis process of used pneumatic tires, as described above. For example, European Patent Application Publication No. 3427975 refers to "Rubber Chemistry and Technology", Vol. 85, No. 3, pages 408-449 (2012), especially pages 438, 440, and 442, and states that recycled carbon black can be obtained by pyrolysis of organic materials at 550 to 800°C with exclusion of oxygen, or by vacuum pyrolysis at relatively low temperatures ([0027]). Carbon blacks obtained from such pyrolysis processes usually lack functional groups on the surfaces thereof, as mentioned in[0004] of Japanese Patent No. 6856781 (A Comparison of Surface Morphology And Chemistry of Pyrolytic Carbon Blacks with Commercial Carbon Blacks, Powder Technology 160 (2005) 190-193).

The recycled carbon black may lack functional groups on the surface thereof or may be treated so as to include functional groups on the surface thereof. The treatment to be performed so as to include functional groups on the surface of the recycled carbon black can be carried out by ordinary methods. For example, in European Patent Application Publication No. 3173251, carbon black obtained from a pyrolysis process is treated with potassium permanganate under acidic conditions to obtain carbon black containing hydroxyl and/or carboxyl groups on the surface thereof. Also, in Japanese Patent No. 6856781, carbon black obtained from a pyrolysis process is treated with an amino acid compound containing at least one thiol or disulfide group to obtain carbon black whose surface has been activated. The recycled carbon black according to the present embodiment also includes carbon black that has been treated so as to include functional groups on the surface thereof.

As the recycled carbon black, recycled carbon blacks commercially available from Strebl Green Carbon Pte Ltd, LD Carbon, etc., can be used.

From the viewpoint of improving wear resistance and durability, the average primary particle diameter of the carbon black is preferably not greater than 25 nm, more preferably not greater than 22 nm, and further preferably not greater than 19 nm. The average primary particle diameter is preferably not less than 6 nm, more preferably not less than 9 nm, and further preferably not less than 12 nm.

The average primary particle diameter of the carbon black can be obtained by observing the carbon black with a transmission or scanning electron microscope, measuring the outer diameters of 400 or more primary particles of the carbon black observed in the field of view, and averaging these outer diameters.

From the viewpoint of improving wear resistance and durability, the nitrogen adsorption specific surface area ($N_2SA$) of the carbon black is preferably not less than 10 $m^2/g$, more preferably not less than 20 $m^2/g$, and further preferably not less than 30 $m^2/g$. This nitrogen adsorption specific surface area ($N_2SA$) is preferably not greater than 250 $m^2/g$, more preferably not greater than 200 $m^2/g$, and further preferably not greater than 150 $m^2/g$. The nitrogen adsorption specific surface area ($N_2SA$) of the carbon black is measured according to JIS K6217-2: 2017.

The amount BCB of the carbon black per 100 parts by mass of the rubber component is preferably not less than 1 part by mass, more preferably not less than 3 parts by mass, and still more preferably not less than 5 parts by mass from the viewpoint of exhibiting a reinforcing action and the viewpoint of preventing deterioration due to UV light. The amount BCB is preferably not greater than 60 parts by mass, more preferably not greater than 50 parts by mass, still more preferably not

greater than 40 parts by mass, and still more preferably not greater than 30 parts by mass from the viewpoint of reducing the rolling resistance.

The amount of the recycled carbon black in 100 parts by mass of the carbon black is not particularly limited, and can be, for example, greater than 1 part by mass, greater than 5 parts by mass, greater than 10 parts by mass, greater than 20 parts by mass, greater than 25 parts by mass, or greater than 30 parts by mass. From the viewpoint of exhibiting the reinforcing action of the carbon black, the amount of the recycled carbon black is preferably less than 95 parts by mass, more preferably less than 90 parts by mass, and further preferably less than 85 parts by mass.

[Silica]

The silica is not particularly limited, and silicas that are generally used in the tire industry, such as silica prepared by a dry process (anhydrous silica) and silica prepared by a wet process (hydrous silica), can be used. From the viewpoint of environmental load, silica made from a biomass material (e.g., amorphous silica purified from rice husks) may also be used. Among them, hydrous silica prepared by a wet process is preferable for the reason that it has a higher silanol group content. These silicas may be used individually, or two or more of these silicas may be used in combination.

Silica made from a biomass material can be obtained, for example, by: extracting silicate from rice husk ashes obtained by burning rice husks, with a sodium hydroxide solution; using the silicate to react with sulfuric acid in the same way as conventional wet silica; and then filtering, washing with water, drying, and pulverizing the precipitated silicon dioxide produced.

It should be noted that when silica crystallizes, the silica is insoluble in water, and silicic acid, which is a component of the silica, cannot be utilized. The crystallization of silica in the rice husk ash can be suppressed by controlling the combustion temperature and the combustion time (see Japanese Laid-Open Patent Publication No. 2009-2594, Akita Prefectural University Web Journal B/2019, vol. 6, p. 216-222, etc.).

The amorphous silica extracted from rice husks may be ones commercially available from Wilmar International Limited, etc.

From the viewpoint of improving wear resistance and durability, the average primary particle diameter of the silica is preferably not greater than 22 nm, more preferably not greater than 19 nm, and further preferably not greater than 16 nm. The average primary particle diameter is preferably not less than 6 nm, more preferably not less than 9 nm, and further preferably not less than 12 nm.

The average primary particle diameter of the silica can be obtained by observing the silica with a transmission or scanning electron microscope, measuring the outer diameters of 400 or more primary particles of the silica observed in the field of view, and averaging these outer diameters.

From the viewpoint of improving wear resistance and durability, the nitrogen adsorption specific surface area ($N_2SA$) of the silica is preferably not less than 100 $m^2/g$, more preferably not less than 110 $m^2/g$, and further preferably not less than 120 $m^2/g$. This nitrogen adsorption specific surface area is preferably not greater than 500 $m^2/g$, more preferably not greater than 350 $m^2/g$, and further preferably not greater than 250 $m^2/g$.

The nitrogen adsorption specific surface area ($N_2SA$) of the silica is measured by the BET method according to ASTM D3037-93.

The amount BSi of the silica per 100 parts by mass of the rubber component is preferably not less than 10 parts by mass, more preferably not less than 20 parts by mass, and still more preferably not less than 30 parts by mass from the viewpoint of improving wear resistance and durability. The amount BSi of the silica is preferably not greater than 70 parts by mass, more preferably not greater than 60 parts by mass, and still more preferably not greater than 50 parts by mass from the viewpoint of capability of obtaining flexibility to alleviate stress.

As described above, the amount BCB of the carbon black per 100 parts by mass of the rubber component is smaller than the amount BSi of the silica per 100 parts by mass of the rubber component. The ratio BCB/BSi of the amount BCB of the carbon black to the amount BSi of the silica is preferably not less than 0.50, more preferably not less than 0.55, and still more preferably not less than 0.60 from the viewpoint that the tire can have wet performance and wear resistance performance that are well balanced with each other while maintaining low rolling resistance. The ratio BCB/BSi is preferably not greater than 0.95, more preferably not greater than 0.90, and more preferably not greater than 0.85.

[Other Fillers]

As fillers other than the silica and the carbon black, fillers that are generally used in the tire industry, such as aluminum hydroxide, calcium carbonate, alumina, clay, and talc, can be blended.

The amount CCB of the carbon black in 100 parts by mass of the filler is preferably not less than 30 parts by mass, and more preferably not less than 35 parts by mass from the viewpoint that the tire can have wet performance and wear resistance performance that are well balanced with each other while maintaining low rolling resistance. The amount CCB of the carbon black is preferably not greater than 50 parts by mass, and more preferably not greater than 45 parts by mass.

The total amount of the filler per 100 parts by mass of the rubber component is preferably not less than 40 parts by mass, more preferably not less than 50 parts by mass, and still more preferably not less than 55 parts by mass from the viewpoint of improving wear resistance and durability. The total amount is preferably not greater than 75 parts by mass, more preferably not greater than 70 parts by mass, and still more preferably not greater than 65 parts by mass from the viewpoint that the tread can obtain flexibility to alleviate stress.

[Silane Coupling Agent]

As described above, the rubber composition contains silica as a filler. The silica is preferably used in combination with a silane coupling agent. The silane coupling agent is not particularly limited, and any silane coupling agent that is conventionally used in combination with silica in the tire industry can be used. Examples of the silane coupling agent include: mercapto-based silane coupling agents such as 3-mercaptopropyltrimethoxysilane and NXT-Z100, NXT-Z45, and NXT (3-octanoylthiopropyltriethoxysilane) manufactured by Momentive Performance Materials, Inc.; sulfide-based silane coupling agents such as bis(3-triethoxysilylpropyl)disulfide and bis(3-triethoxysilylpropyl)tetrasulfide; thioester-based coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; and chloro-based silane coupling agents such as 3-chloropropyltrimethoxysilane and 3-chloropropyltriethoxysilane. Among them, sulfide-based silane coupling agents and/or mercapto-based silane coupling agents are preferable, and mercapto-based silane coupling agents are more preferable. One of these silane coupling agents may be used alone, or two or more of these silane coupling agents may be used in combination.

The "mercapto-based silane coupling agent" means a silane coupling agent having a mercapto group and a silane coupling agent having a structure in which a mercapto group is protected by a protecting group. The mercapto-based silane coupling agent is not particularly limited, and is, for example, at least one compound selected from the group consisting of a compound represented by the following chemical formula (1), a compound represented by the following chemical formula (2), and a compound containing a linking unit A represented by the following chemical formula (3) and a linking unit B represented by the following chemical formula (4). Among them, for the reason that the advantageous effects of the present disclosure can be more favorably achieved, at least one of the compound represented by the following chemical formula (1) and the compound containing the linking unit A represented by the following chemical formula (3) and the linking unit B represented by the following chemical formula (4) is preferable, and the compound represented by the following chemical formula (1) is more preferable.

[Chem.1]

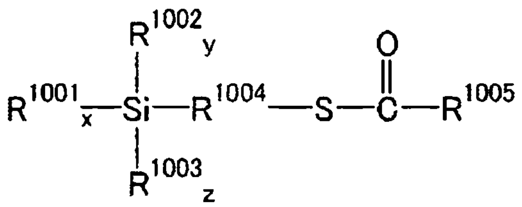

(1)

( wherein $R^{1001}$ represents a monovalent group selected from -Cl, -Br, $-OR^{1006}$, $-O(O=)CR^{1006}$, $ON=CR^{1006}R^{1007}$, $-NR^{1006}R^{1007}$, and $-(OSiR^{1006}R^{1007})_h(OSiR^{1006}R^{1007}R^{1008})$ (wherein $R^{1006}$, $R^{1007}$, and $R^{1008}$ may be the same or may be different from each other and each represent a hydrogen atom or a monovalent hydrocarbon group having 1 to 18 carbon atoms, and an average of "h" is 1 to 4), $R^{1002}$ represents $R^{1001}$, a hydrogen atom, or a monovalent hydrocarbon group having 1 to 18 carbon atoms, $R^{1003}$ represents a $-[O(R^{1009}O)_j]-$ group ($R^{1009}$ is an alkylene group having 1 to 18 carbon atoms, and "j" is an integer from 1 to 4), $R^{1004}$ represents a divalent hydrocarbon group having 1 to 18 carbon atoms, $R^{1005}$ represents a monovalent hydrocarbon group having 1 to 18 carbon atoms, and "x", "y", and "z" are numerals that satisfy the relationships of $x + y + 2z = 3$, $0 \le x \le 3$, $0 \le y \le 2$, and $0 \le z \le 1$.)

[Chem.2]

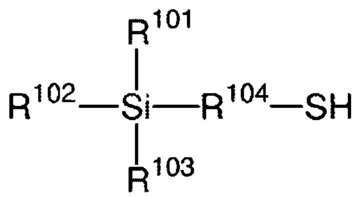

(2)

( wherein, $R^{101}$, $R^{102}$, and $R^{103}$ each independently represents an alkyl having 1 to 12 carbon atoms, an alkoxy having 1 to 12 carbon atoms, or a group represented by -O-($R^{111}$-O)$_z$-$R^{112}$ (z pieces of $R^{111}$ each independently represents a divalent hydrocarbon group having 1 to 30 carbon atoms; $R^{112}$ represents an alkyl having 1 to 30 carbon atoms, an alkenyl having 2 to 30 carbon atoms, an aryl having 6 to 30 carbon atoms, or an aralkyl having 7 to 30 carbon atoms; and z represents an integer of 1 to 30); and $R^{104}$ represents an alkylene having 1 to 6 carbon atoms. )

[Chem.3]

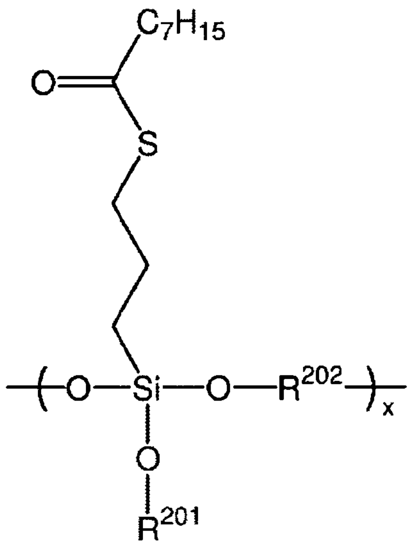

(3)

[Chem.4]

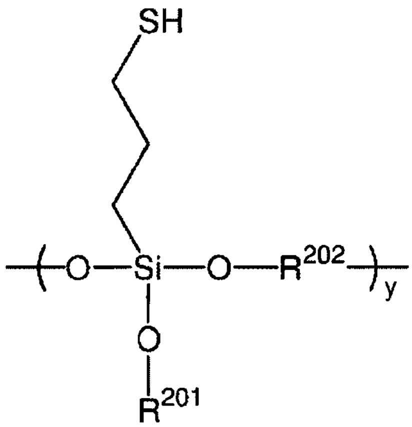

(4)

(wherein, x represents an integer of 0 or more; y represents an integer of 1 or more; $R^{201}$ represents hydrogen atom, or an alkyl having 1 to 30 carbon atoms, an alkenyl having 2 to 30 carbon atoms or an alkynyl having 2 to 30 carbon atoms ( the alkyl, the alkenyl, and the alkynyl may be substituted with a halogen atom, hydroxyl or carboxyl. ); and $R^{202}$ represents an alkylene having 1 to 30 carbon atoms, an alkenylene having 2 to 30 carbon atoms, or an alkynylene having 2 to 30 carbon atoms; where $R^{201}$ and $R^{202}$ may together form a ring structure.)

In the compound represented by the above chemical formula (1), preferably, $R^{1005}$, $R^{1006}$, $R^{1007}$, and $R^{1008}$ are each independently a group selected from the group consisting of a linear, cyclic, or branched alkyl group, alkenyl group, aryl group, and aralkyl group each having 1 to 18 carbon atoms. In addition, in the case where $R^{1002}$ is a monovalent hydrocarbon group having 1 to 18 carbon atoms, $R^{1002}$ is preferably a group selected from the group consisting of a linear, cyclic, or branched alkyl group, alkenyl group, aryl group, and aralkyl group. $R^{1009}$ is preferably a linear, cyclic, or branched alkylene group, and is particularly preferably a linear alkylene group. Examples of $R^{1004}$ include an alkylene group having 1 to 18 carbon atoms, an alkenylene group having 2 to 18 carbon atoms, a cycloalkylene group having 5 to 18 carbon atoms, a cycloalkylalkylene group having 6 to 18 carbon atoms, an arylene group having 6 to 18 carbon atoms, and an aralkylene group having 7 to 18 carbon atoms. The alkylene group and the alkenylene group may each be either linear or branched, and the cycloalkylene group, the cycloalkylalkylene group, the arylene group, and the aralkylene group may each have a functional group, such as a lower alkyl group, on the ring thereof. $R^{1004}$ is preferably an alkylene group having 1 to 6 carbon atoms, and is particularly preferably a linear alkylene group such as a methylene group, an ethylene group, a trimethylene group, a tetramethylene group, a pentamethylene group, and a hexamethylene group.

Specific examples of $R^{1002}$, $R^{1005}$, $R^{1006}$, $R^{1007}$, and $R^{1008}$ in chemical formula (1) include a methyl group, an ethyl group, an n-propyl group, an isopropyl group, an n-butyl group, an isobutyl group, a sec-butyl group, a tert-butyl group, a pentyl group, a hexyl group, an octyl group, a decyl group, a dodecyl group, a cyclopentyl group, a cyclohexyl group, a vinyl group, a propenyl group, an allyl group, a hexenyl group, an octenyl group, a cyclopentenyl group, a cyclohexenyl group, a phenyl group, a tolyl group, a xylyl group, a naphthyl group, a benzyl group, a phenethyl group, and a naphthylmethyl group.

Examples of the linear alkylene group as $R^{1009}$ in chemical formula (1) include a methylene group, an ethylene group, an n-propylene group, an n-butylene group, and a hexylene group, and examples of the branched alkylene group as $R^{1009}$ in chemical formula (1) include an isopropylene group, an isobutylene group, and a 2-methylpropylene group.

Specific examples of the silane coupling agent represented by chemical formula (1) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, and 2-lauroylthioethyltrimethoxysilane. Among them, 3-octanoylthiopropyltriethoxysilane is preferable.

The silane coupling agent represented by chemical formula (1) has a thioester structure (that is, a protected mercapto group) in the molecule thereof and has low reactivity with the rubber component up to high temperatures, and strong bond between the rubber component, the silane coupling agent, and the silica during kneading can be suppressed, and the silica can be appropriately dispersed. Thus, the advantageous effects of the present disclosure tend to be able to be more favorably achieved.

Examples of the compound represented by the chemical formula (2) include, for example, 3-mercaptopropyltrimethoxysilane, 3-mercaptopropyltriethoxysilane, 2-mercaptoethyltrimethoxysilane, 2-mercaptoethyltriethoxysilane, a

compound represented by the following chemical formula (5) (Si363 manufactured by Evonik Degussa GmbH), and the like. Among them, the compound represented by the following chemical formula (5) can be appropriately used. They may be used alone, or two or more thereof may be used in combination.

[Chem.5]

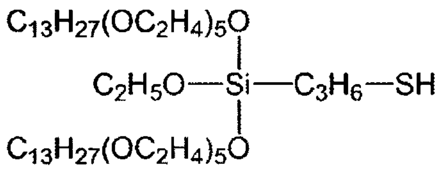

(5)

Examples of the compound comprising the bond unit A represented by the chemical formula (3) and the bond unit B represented by the chemical formula (4) include, for example, those manufactured and sold by Momentive Performance Materials, etc. They may be used alone, or two or more thereof may be used in combination.

From the viewpoint of enhancing the dispersibility of the silica, the amount (total amount when a plurality of silane coupling agents is used in combination) of the silane coupling agent per 100 parts by mass of silica is preferably more than 1 part by mass, more preferably more than 3 parts by mass, further preferably more than 5 parts by mass, and still further preferably more than 7 parts by mass. From the viewpoint of preventing deterioration in wear resistance, the amount is preferably less than 20 parts by mass, more preferably less than 15 parts by mass, and further preferably less than 12 parts by mass.

[Other Ingredients]

In addition to the above components, the rubber composition according to the present embodiment can contain ingredients that are conventionally and generally used in the tire industry, such as a softener, wax, stearic acid, zinc oxide, an antioxidant, a vulcanizing agent, and a vulcanization accelerator, as appropriate.

Examples of the softener include a resin component, an oil, and a liquid rubber.

The resin component that can be used in the present embodiment is not particularly limited, resins that are commonly used in the tire industry can be used, and examples of such resins include adhesive resins such as C9-based resins, C5-based resins, C5C9-based resins, dicyclopentadiene-based resins, aromatic vinyl-based resins, coumarone-based resins, indene-based resins, terpene-based resins, rosin-based resins, and phenol-based resins. One of these resin components may be used alone, or two or more of these resin components may be used in combination.

C9-based resins refer to resins obtained by polymerizing C9 fractions, and may be resins obtained by polymerizing C9 fractions alone, or may be copolymers obtained by copolymerizing C9 fractions and other components. For example, a resin obtained by copolymerizing dicyclopentadiene (DCPD) and a C9 fraction is referred to as DCPD/C9 resin. These resins may also be hydrogenated or modified. Examples of C9 fractions include petroleum fractions having 8 to 10 carbon atoms such as vinyltoluene, alkylstyrene, coumarone, indene, methylindene, and dicyclopentadiene. One of these C9-based resins may be used alone, or two or more of these C9-based resins may be used in combination.

C5-based resins refer to resins obtained by polymerizing C5 fractions, and these resins may be hydrogenated or modified. Examples of C5 fractions other than dicyclopentadiene include petroleum fractions having 4 to 5 carbon atoms such as cyclopentadiene, isoprene, pentane, isopentane, neopentane, pentene, and pentadiene. One of these C5-based resins may be used alone, or two or more of these C5-based resins may be used in combination.

C5C9-based resins refer to resins obtained by copolymerizing the C5 fractions and the C9 fractions, and these resins may be hydrogenated or modified. As C5C9-based petroleum resins, for example, products commercially available from Tosoh Corporation, Zibo Luhua Hongjin New Material Group Co., Ltd., etc., can be used. One of these C5C9-based resins may be used alone, or two or more of these C5C9-based resins may be used in combination.

Dicyclopentadiene-based resins refer to resins containing cyclopentadiene (CPD) or dicyclopentadiene (DCPD) as a monomer component, and these resins may be hydrogenated or modified. Examples of dicyclopentadiene-based resins include DCPD/C9 resins containing dicyclopentadiene and the C9 fractions as monomer components (the DCPD/C9 resins may be hydrogenated or modified). DCPD/C9 resins containing dicyclopentadiene and styrene as monomer components are preferable, and DCPD/C9 resins containing dicyclopentadiene, styrene, and indene as monomer components are particularly preferable. As dicyclopentadiene-based resins, for example, products commercially available from Exxon Mobil Corporation, ENEOS Corporation, Zeon Corporation, Maruzen Petrochemical Co., Ltd., etc., can be used. One of these dicyclopentadiene-based resins may be used alone, or two or more of these dicyclopentadiene-based resins may be used in combination.

Aromatic vinyl-based resins refer to resins each containing an aromatic vinyl compound such as styrene, α-methylstyrene, vinyltoluene, and p-chlorostyrene as a monomer component whose amount is the largest, and these resins may be hydrogenated or modified. As an aromatic vinyl-based resin, a homopolymer of α-methylstyrene or styrene or a copolymer of α-methylstyrene and styrene is preferable, and a copolymer of α-methylstyrene and styrene is more preferable, for the reasons that the polymer is economic, is easily processed, and has excellent heat generation properties. As aromatic vinyl-based resins, for example, products commercially available from Kraton Corporation, Eastman Chemical Company, Mitsui Chemicals, Inc., etc., can be used. One of these aromatic vinyl-based resins may be used alone, or two or more of these aromatic vinyl-based resins may be used in combination.

Coumarone-based resins refer to resins containing coumarone as a monomer component, and these resins may be hydrogenated or modified. Examples of coumarone-based resins include coumarone-indene resins containing coumarone and indene as monomer components, and coumarone-indene-styrene resins containing coumarone, indene, and styrene as monomer components. One of these coumarone-based resins may be used alone, or two or more of these coumarone-based resins may be used in combination.

Indene-based resins refer to resins containing indene as a monomer component, and these resins may be hydrogenated or modified. Examples of indene-based resins include coumarone-indene resins containing coumarone and indene as monomer components, and coumarone-indene-styrene resins containing coumarone, indene, and styrene as monomer components. One of these indene-based resins may be used alone, or two or more of these indene-based resins may be used in combination.

Terpene-based resins refer to resins each containing a terpene compound such as α-pinene, β-pinene, limonene, and dipentene as a monomer component whose amount is the largest, and these resins may be hydrogenated or modified. Specific examples of terpene-based resins include: polyterpene resins each containing one or more of the terpene compounds alone as a monomer component; aromatic modified terpene resins each containing the terpene compound and an aromatic compound as monomer components; and terpene-phenol resins each containing the terpene compound and a phenol-based compound as monomer components. Examples of aromatic compounds as monomer components of aromatic modified terpene resins include styrene, α-methylstyrene, vinyltoluene, and divinyltoluene. Examples of phenol-based compounds as monomer components of terpene-phenol resins include phenol, bisphenol A, cresol, and xylenol. One of these terpene-based resins may be used alone, or two or more of these terpene-based resins may be used in combination.

Rosin-based resins refer to resins containing rosin acid compounds such as abietic acid, neoabietic acid, palustric acid, and isopimaric acid, and these resins may be hydrogenated or modified. The rosin-based resins are not particularly limited, and examples of the rosin-based resins include natural rosin resins, and rosin-modified resin modified by hydrogenation, disproportionation, dimerization, esterification, etc. One of these rosin-based resins may be used alone, or two or more of these rosin-based resins may be used in combination.

Phenol-based resins refer to resins each containing a phenol compound such as phenol and cresol as a monomer component whose amount is the largest. The phenol-based resins are not particularly limited, and examples of the phenol-based resins include phenol formaldehyde resins, alkylphenol formaldehyde resins, alkylphenol acetylene resins, and oil-modified phenol formaldehyde resins. One of these phenol-based resins may be used alone, or two or more of these phenol-based resins may be used in combination.

From the viewpoint of ride comfort and wet performance, the softening point of the resin component is preferably not lower than 80°C, more preferably not lower than 90°C, and further preferably not lower than 100°C. From the viewpoint of processability and improvement of the dispersibility of the rubber component and the fillers, the softening point of the resin component is preferably not higher than 150°C, more preferably not higher than 140°C, and further preferably not higher than 130°C. The softening point of the resin is a temperature that is measured with a ring and ball softening point measuring device according to 7.7 in JIS K 6220-1: 2015 and at which a ball has descended.

In the case where the rubber composition contains a resin component, from the viewpoint of ride comfort and wet performance, the amount of the resin component per 100 parts by mass of the rubber component is preferably not less than 1 part by mass, more preferably not less than 3 parts by mass, and further preferably not less than 5 parts by mass. From the viewpoint of suppression of heat generation, the amount of the resin component is preferably not greater than 60 parts by mass, more preferably not greater than 50 parts by mass, further preferably not greater than 40 parts by mass, and particularly preferably not greater than 30 parts by mass.

Examples of the oil include process oils, vegetable fats and oils, and animal fats and oils. Examples of the process oils include paraffin-based process oils, naphthene-based process oils, and aroma-based process oils. In addition, a process oil that has a low content of a polycyclic aromatic (PCA) compound and for which environmental impact is taken into consideration can also be used. Examples of the low PCA content process oil include a mild extraction solvate (MES), a treated distillate aromatic extract (TDAE), and a heavy naphthenic oil.

In the case where the rubber composition contains an oil, from the viewpoint of improving processability, the amount of the oil per 100 parts by mass of the rubber component is preferably not less than 1 part by mass, more preferably not less than 3 parts by mass, and further preferably not less than 5 parts by mass. From the viewpoint of improving wear resistance, the amount of the oil is preferably not greater than 90 parts by mass, more preferably not greater than 70 parts

by mass, further preferably not greater than 50 parts by mass, and particularly preferably not greater than 30 parts by mass.

The liquid rubber is not particularly limited as long as it is a polymer in a liquid state at room temperature (25°C), and examples of the liquid rubber include liquid butadiene rubber (liquid BR), liquid styrene-butadiene rubber (liquid SBR), liquid isoprene rubber (liquid IR), liquid styrene-isoprene rubber (liquid SIR), and liquid farnesene rubber. These liquid rubbers may be used individually, or two or more of these liquid rubbers may be used in combination.

In the case where the rubber composition contains a liquid rubber, the amount of the liquid rubber per 100 parts by mass of the rubber component is preferably not less than 1 part by mass, more preferably not less than 3 parts by mass, and further preferably not less than 5 parts by mass. The amount of the liquid rubber is preferably not greater than 50 parts by mass, more preferably not greater than 40 parts by mass, and further preferably not greater than 20 parts by mass.

The wax is not particularly limited, and examples of the wax include: petroleum waxes such as paraffin wax and microcrystalline wax; and synthesized waxes such as polymers of ethylene, propylene, and the like. As commercially available products, products of OUCHI SHINKO CHEMICAL INDUSTRIAL CO., LTD., NIPPON SEIRO CO., LTD., Seiko Chemical Co., Ltd., etc., can be used. These waxes may be used individually, or two or more of these waxes may be used in combination.

In the case where the rubber composition contains a wax, from the viewpoint of the weather resistance of the rubber, the amount of the wax per 100 parts by mass of the rubber component is preferably not less than 0.5 parts by mass, more preferably not less than 1.0 part by mass, and further preferably not less than 1.5 parts by mass. From viewpoint of preventing whitening of the tire due to blooming, the amount of the wax is preferably not greater than 10 parts by mass and more preferably not greater than 5.0 parts by mass.

The antioxidant is not particularly limited, and examples of the antioxidant include antioxidants such as amine-based compounds, quinoline-based compounds, quinone-based compounds, phenol-based compounds, imidazole-based compounds, and carbamic acid metal salts. Phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, and N-cyclohexyl-N'-phenyl-p-phenylenediamine, and quinoline-based antioxidants such as a 2,2,4-trimethyl-1,2-dihydroquinoline polymer and 6-ethoxy-2,2,4-trimethyl-1,2-dihydroquinoline are preferable. These antioxidants may be used individually, or two or more of these antioxidants may be used in combination.

In the case where the rubber composition contains an antioxidant, from the viewpoint of the ozone crack resistance of the rubber, the amount of the antioxidant per 100 parts by mass of the rubber component is preferably not less than 0.5 parts by mass, more preferably not less than 1.0 part by mass, and further preferably not less than 1.5 parts by mass. From the viewpoint of wear resistance and wet grip performance, the amount of the antioxidant is preferably not greater than 10 parts by mass and more preferably not greater than 5.0 parts by mass.

As the stearic acid, a conventionally known one can be used, and, for example, products of NOF Corporation, Kao Corporation, FUJIFILM Wako Pure Chemical Corporation, Chiba Fatty Acid Co., Ltd., etc., can be used. These stearic acids may be used individually, or two or more of these stearic acids may be used in combination.

In the case where the rubber composition contains stearic acid, from the viewpoint of processability, the amount of the stearic acid per 100 parts by mass of the rubber component is preferably not less than 0.5 parts by mass, more preferably not less than 1.0 part by mass, and further preferably not less than 1.5 parts by mass. From the viewpoint of a vulcanization rate, the amount of the stearic acid is preferably not greater than 10 parts by mass and more preferably not greater than 5.0 parts by mass.

As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used. These zinc oxides may be used individually, or two or more of these zinc oxides may be used in combination.

In the case where the rubber composition contains zinc oxide, from the viewpoint of processability, the amount of the zinc oxide per 100 parts by mass of the rubber component is preferably not less than 0.5 parts by mass, more preferably not less than 1.0 part by mass, and further preferably not less than 1.5 parts by mass. From the viewpoint of wear resistance, the amount of the zinc oxide is preferably not greater than 10 parts by mass and more preferably not greater than 5.0 parts by mass.

As the vulcanizing agent, sulfur is suitably used. As the sulfur, powdery sulfur, oil-treated sulfur, precipitated sulfur, colloidal sulfur, insoluble sulfur, highly dispersible sulfur, etc., can be used.

In the case where the rubber composition contains sulfur as a vulcanizing agent, from the viewpoint of ensuring a sufficient vulcanization reaction, the amount of the sulfur per 100 parts by mass of the rubber component is preferably not less than 0.1 parts by mass, more preferably not less than 0.5 parts by mass, and further preferably not less than 1.0 part by mass. From the viewpoint of prevention of deterioration, the amount of the sulfur is preferably not greater than 5.0 parts by mass, more preferably not greater than 4.0 parts by mass, and further preferably not greater than 3.5 parts by mass. When oil-containing sulfur is used as a vulcanizing agent, the amount of the vulcanizing agent is represented as the amount of pure sulfur contained in the oil-containing sulfur.

Examples of vulcanizing agents other than sulfur include alkylphenol-sulfur chloride condensates, sodium 1,6-hexamethylene dithiosulfate dihydrate, and 1,6-bis (N, N'-dibenzylthiocarbamoyldithio) hexane. As these vulcanizing agents other than sulfur, products commercially available from Taoka Chemical Co., Ltd., LANXESS, Flexsys, etc., can be used.

Examples of the vulcanization accelerator include sulfenamide-based vulcanization accelerators, thiazole-based vulcanization accelerators, thiuram-based vulcanization accelerators, thiourea-based vulcanization accelerators, guanidine-based vulcanization accelerators, dithiocarbamic acid-based vulcanization accelerators, aldehyde-amine-based vulcanization accelerators, aldehyde-ammonia-based vulcanization accelerators, imidazoline-based vulcanization accelerators, and xanthate-based vulcanization accelerators. These vulcanization accelerators may be used individually, or two or more of these vulcanization accelerators may be used in combination. Among them, from the viewpoint of more suitably obtaining the desired effect, one or more vulcanization accelerators selected from the group consisting of sulfenamide-based vulcanization accelerators, guanidine-based vulcanization accelerators, and thiazole-based vulcanization accelerators are preferable, and sulfenamide-based vulcanization accelerators are more preferable.

Examples of the sulfenamide-based vulcanization accelerators include N-tert-butyl-2-benzothiazolyl sulfenamide (TBBS), N-cyclohexyl-2-benzothiazolyl sulfenamide (CBS), and N, N-dicyclohexyl-2-benzothiazolyl sulfenamide (DCBS). Among them, N-tert-butyl-2-benzothiazolyl sulfenamide (TBBS) and N-cyclohexyl-2-benzothiazolyl sulfenamide (CBS) are preferable.

Examples of the guanidine-based vulcanization accelerators include 1,3-diphenylguanidine (DPG), 1,3-di-o-tolylguanidine, 1-o-tolylbiguanide, a di-o-tolylguanidine salt of dicatechol borate, 1,3-di-o-cumenylguanidine, 1,3-di-o-biphenylguanidine, and 1,3-di-o-cumenyl-2-propionylguanidine. Among them, 1,3-diphenylguanidine (DPG) is preferable.

Examples of the thiazole-based vulcanization accelerators include 2-mercaptobenzothiazole, a cyclohexylamine salt of 2-mercaptobenzothiazole, and di-2-benzothiazolyl disulfide. Among them, 2-mercaptobenzothiazole is preferable.

In the case where the rubber composition contains a vulcanization accelerator, the amount of the vulcanization accelerator per 100 parts by mass of the rubber component is preferably not less than 1.0 part by mass, more preferably not less than 1.5 parts by mass, and further preferably not less than 2.0 parts by mass. The amount of the vulcanization accelerator is preferably not greater than 8.0 parts by mass, more preferably not greater than 7.0 parts by mass, further preferably not greater than 6.0 parts by mass, and particularly preferably not greater than 5.0 parts by mass. When the amount of the vulcanization accelerator is set to be within such a range, it tends to be possible to ensure fracture strength and elongation.

The rubber composition is produced, for example, by kneading the respective components described above, using a rubber kneading device such as an open roll and a Banbury mixer.

As for the kneading conditions, in a base kneading step of kneading the additives other than the vulcanizing agent and the vulcanization accelerator, the kneading temperature is normally 100 to 180°C and preferably 120 to 170°C. In a finish kneading step of kneading the vulcanizing agent and the vulcanization accelerator, the kneading temperature is normally 120°C or lower and preferably 85 to 110°C.

The produced rubber composition is processed into a predetermined shape using an extruder or the like. In a forming machine, the processed rubber composition is combined with sidewalls, etc., to prepare a green tire (unvulcanized tire). The green tire is vulcanized in a mold incorporated in a vulcanizing machine, thereby obtaining a tire. The tire is a crosslinked product of the green tire. The vulcanization temperature is normally 140 to 190°C and preferably 150 to 185°C. The vulcanization time is normally 5 to 15 minutes.

The rubber composition described above is used for the tread of a tire (specifically, a cap portion which comes into contact with a road surface during running).

Next, a tire having a tread formed using this rubber composition will be described.

[Tire]

FIG. 1 shows an example of a tire 2 according to an embodiment of the present invention. The tire 2 is mounted on a vehicle such as a truck or a bus. The tire 2 is a heavy duty tire.

The tire 2 includes portions including a tread portion T, a pair of sidewalls S, and a pair of bead portions B. The tire 2 shown in FIG. 1 is in a state of being fitted on a rim R (normal rim).

FIG. 1 shows a part of a section of the tire 2 along a flat surface including the rotation axis (not shown) of the tire 2 (hereinafter, referred to as meridian cross-section). The direction indicated by the double-pointed arrow AD is the axial direction of the tire 2. The axial direction of the tire 2 means the direction parallel to the rotation axis of the tire 2. The direction indicated by the double-pointed arrow RD is the radial direction of the tire 2. The direction perpendicular to the paper surface of FIG. 1 is the circumferential direction of the tire 2. The dashed line EL extending radially indicates the equator plane of the tire 2.

In the axial direction, a direction away from the equator plane points axially outside the tire 2, and a direction

approaching the equator plane points axially inside the tire 2. The direction indicated by the arrow RD1 points radially outside the tire 2, and the direction indicated by the arrow RD2 points radially inside the tire 2.

The tire 2 includes constitutional elements including a tread 4, a pair of sidewalls 6, a pair of chafers 8, a pair of beads 10, a carcass 12, a reinforcing layer 14, a pair of cushion layers 16, a pair of filler reinforcing layers 18, and an inner liner 20. Although FIG. 1 does not show a portion of the meridian cross-section on the left side with respect to the equator plane, the internal structure of the tire 2 is a structure symmetrical with respect to the equator plane.

The tread 4 is positioned radially outside the carcass 12. The tread 4 extends circumferentially. The tread 4 includes a tread surface 22. The tread 4 is configured to come into contact with a road surface on the tread surface 22. A groove 24 is carved on the tread 4.

The position indicated by the reference sign Eq is the equator of the tire 2. The equator Eq is a point of intersection between the tread surface 22 and the equator plane. In a case where the groove 24 is on the equator plane as in the tire 2, the equator is specified based on a virtual tread surface obtained by assuming that there is no groove 24.

The position indicated by the reference sign TE is an end of the tread surface 22. In a case where a tread surface of a tire has an apparently unidentifiable end, the end of the tread surface is assumed to be a position on an outer surface of the tire corresponding to an axially outer end (that is, a ground-contact end) of a ground-contact surface obtained by applying a normal load to the tire in a normal state with a camber angle set to 0 degrees and bringing the tire into contact with a flat surface.

In FIG. 1, the length indicated by the arrow WT is the width of the tread surface 22. The width WT of the tread surface 22 is represented by the axial distance from one end TE to the other end TE of the tread surface 22. The width WT of the tread surface 22 is measured along the tread surface 22. In the present invention, the width WT of the tread surface 22 is used as the axial width Wt of the tread 4.

The tread 4 includes a base portion 26 and a cap portion 28. The base portion 26 is composed of crosslinked rubber. Although not described in detail, the base portion 26 of the tire 2 is composed of crosslinked rubber commonly used in a base portion of a heavy duty tire. The base portion 26 covers the reinforcing layer 14. The cap portion 28 is positioned radially outside the base portion 26. The cap portion 28 covers the base portion 26. The cap portion 28 includes the tread surface 22. The cap portion 28 is composed of crosslinked rubber. The cap portion 28 of the tire 2 is formed using the above-described rubber composition. In other words, the cap portion 28 is formed from the above-described rubber composition. The crosslinked rubber composing the cap portion 28 is a crosslinked product of the above-described rubber composition.

Each sidewall 6 is provided continuously to the tread 4. The sidewall 6 is positioned radially inside the tread 4. The sidewall 6 is positioned axially outside the carcass 12. The sidewall 6 is composed of crosslinked rubber in consideration of cut resistance.

The position indicated by the reference sign PW is the axially outer end (hereinafter, referred to as outer end PW) of the tire 2. In a case where a decoration such as a pattern or a character is present on an outer surface of the tire 2, the outer end PW is specified based on a virtual outer surface obtained by assuming that there is no decoration. The tire 2 has a maximum width at the outer end PW. The outer end PW is also referred to as the maximum width position. The axial distance from one maximum width position PW to the other maximum width position PW obtained in the tire 2 in a normal state is the section width of the tire 2 (see JATMA or the like).

Each chafer 8 is positioned radially inside the sidewall 6. The chafer 8 is in contact with the rim R. The chafer 8 is composed of crosslinked rubber in consideration of wear resistance.

Each bead 10 is positioned axially inside the chafer 8. The bead 10 is positioned radially inside the sidewall 6.

The bead 10 includes a core 30 and an apex 32. The core 30 extends circumferentially. The core 30 includes a wound steel wire, which is not shown. The core 30 has a substantially hexagonal sectional shape. The apex 32 is positioned radially outside the core 30. The apex 32 extends radially outward from the core 30. The apex 32 is tapered outward. The radially outer end AG of the apex 32 is positioned radially inside the maximum width position PW.

Although not described in detail, the apex 32 includes an inner apex and an outer apex. The inner apex is positioned radially outside the core 30, and is composed of hard crosslinked rubber. The outer apex is positioned radially outside the inner apex, and is composed of crosslinked rubber that is softer than the crosslinked rubber of the inner apex.

The carcass 12 is positioned inside the tread 4, the pair of sidewalls 6, and the pair of chafers 8. The carcass 12 extends between the pair of beads 10. The carcass 12 of the tire 2 has a radial structure.

The carcass 12 includes at least one carcass ply 34. The carcass 12 of the tire 2 includes one carcass ply 34. The carcass ply 34 is turned up at each bead 10. The carcass ply 34 of the tire 2 is turned up axially from the inside to the outside at each bead 10.

The carcass ply 34 includes a ply body 36 and a pair of turned-up portions 38. The ply body 36 extends between the pair of beads 10. Each turned-up portion 38 is provided continuously to the ply body 36 and is turned up at the bead 10.

The carcass ply 34 includes a number of carcass cords arranged in parallel, which are not shown. These carcass cords are covered with topping rubber. Each carcass cord intersects the equator plane. The angle formed by the carcass cord with respect to the equator plane is not less than 70° and not greater than 90°. The material of the carcass cord of the

tire 2 is steel. The carcass cord is a steel cord.

Each cushion layer 16 is positioned between the reinforcing layer 14 and the carcass 12 at an end of the reinforcing layer 14. The cushion layer 16 is composed of soft crosslinked rubber.

Each filler reinforcing layer 18 is positioned between the carcass 12 and the chafer 8 in the bead portion B. The filler reinforcing layer 18 is turned up at the bead 10. The filler reinforcing layer 18 is disposed so as to wrap the radially inside portion of the bead 10 from the radial inside of the carcass 12.

The filler reinforcing layer 18 includes a number of filler cords arranged in parallel, which are not shown. These filler cords are covered with topping rubber. The material of the filler cord of the tire 2 is steel.

The inner liner 20 is positioned inside the carcass 12. The inner liner 20 is joined to the inner surface of the carcass 12 via an insulation (not shown) composed of crosslinked rubber. The inner liner 20 constitutes the inner surface of the tire 2. The inner liner 20 is composed of crosslinked rubber having an excellent air shielding property.

The reinforcing layer 14 is positioned between the tread 4 and the carcass 12 radially. The reinforcing layer 14 is directly layered on the carcass 12 radially inside the tread 4. The reinforcing layer 14 may be indirectly layered on the carcass 12 via a rubber layer containing crosslinked rubber.

The reinforcing layer 14 of the tire 2 includes a belt 40 and a band 42.

FIG. 2 shows a configuration of the reinforcing layer 14. The direction indicated by the double-pointed arrow CD is the circumferential direction of the tire 2. The direction perpendicular to the paper surface of FIG. 2 is the radial direction of the tire 2. The front side of the paper surface is the radial outside, and the back side is the radial inside.

The belt 40 of the tire 2 includes four belt plies 44. The four belt plies 44 are radially arranged, and are a first belt ply 44A, a second belt ply 44B, a third belt ply 44C, and a fourth belt ply 44D from the radial inside. The first belt ply 44A is the belt ply 44 positioned on the radially innermost side. The fourth belt ply 44D is the belt ply 44 positioned on the radially outermost side.

It is sufficient for the belt 40 to include at least one belt ply 44. The number of belt plies 44 included in the belt 40 may be one, two, or three. The number of belt plies 44 included in the belt 40 may be five or more.

In FIG. 1, the length indicated by the double-pointed arrow W1 is the axial width of the first belt ply 44A. The length indicated by the double-pointed arrow W2 is the axial width of the second belt ply 44B. The length indicated by the double-pointed arrow W3 is the axial width of the third belt ply 44C. The length indicated by the double-pointed arrow W4 is the axial width of the fourth belt ply 44D. The axial width of each belt ply 44 is represented by the axial distance from one end to the other end of the belt ply 44.

In the tire 2, the second belt ply 44B has the widest axial width W2. The axial width W2 of the second belt ply 44B is the axial width of the belt 40, and an end of the second belt ply 44B is an end of the belt 40. The end of the belt 40 of the tire 2 is also the end of the reinforcing layer 14 described above. The fourth belt ply 44D has the narrowest axial width W4. The axial width W1 of the first belt ply 44A and the axial width W3 of the third belt ply 44C are equal, or the axial width W1 of the first belt ply 44A is slightly wider than the axial width W3 of the third belt ply 44C.

In the present invention, among at least one belt ply, a belt ply having the widest axial width is defined as a reference belt ply.

As described above, the four belt plies 44 forming the belt 40 of the tire 2 include the second belt ply 44B as the belt ply 44 having the widest axial width. In the tire 2, the second belt ply 44B is a reference belt ply BP. The axial width W2 of the second belt ply 44B is the axial width Wb of the reference belt ply BP.

As shown in FIG. 1, all of the ends of the four belt plies 44 are positioned axially outside the shoulder circumferential groove described below. The end of the fourth belt ply 44D positioned on the radially outermost side may be disposed axially inside the shoulder circumferential groove.

From the viewpoint of ensuring stiffness of the tread portion T, the ratio (W1/Wt) of the axial width W1 of the first belt ply 44A to the axial width Wt of the tread 4 is preferably not less than 0.80 and not greater than 0.90. The ratio (W2/Wt) of the axial width W2 of the second belt ply 44B to the axial width Wt of the tread 4 is preferably not less than 0.85 and not greater than 0.95. The ratio (W3/Wt) of the axial width W3 of the third belt ply 44C to the axial width Wt of the tread 4 is preferably not less than 0.80 and not greater than 0.90. The axial width W4 of the fourth belt ply 44D is appropriately set according to the specifications of the tire 2.

As shown in FIG. 2, each belt ply 44 included in the belt 40 includes a number of belt cords 46 arranged in parallel. In FIG. 2, each belt cord 46 is represented by a solid line for convenient description, but the belt cord 46 is covered with belt topping rubber 48. The cord count of the belt 40 is not less than 10 ends/50 mm and not greater than 35 ends/50 mm.

The material of the belt cord 46 is steel. In other words, the belt cord 46 of the tire 2 is a steel cord. As described above, the second belt ply 44B of the tire 2 is the reference belt ply BP. The material of the belt cord 46 of the reference belt ply BP is steel.

As described above, the belt 40 includes at least one belt ply 44. In a case where the belt 40 includes two or more belt plies 44, the belt cord 46 of the belt ply 44 other than the reference belt ply BP may be a cord containing an organic fiber (hereinafter, referred to as an organic fiber cord). In this case, examples of the organic fiber include nylon fibers, rayon fibers, polyester fibers, and aramid fibers. From the viewpoint of ensuring stiffness of the tread portion T, the belt cords 46 of

all the belt plies 44 forming the belt 40 are preferably steel cords as in the tire 2.

The belt cord 46 of each belt ply 44 is inclined with respect to the circumferential direction. The inclination direction of the belt cord 46 included in the first belt ply 44A (hereinafter, referred to as the inclination direction of the first belt cord 46A) is equal to the inclination direction of the belt cord 46 included in the second belt ply 44B (hereinafter, referred to as the inclination direction of the second belt cord 46B). The inclination direction of the second belt cord 46B is opposite to the inclination direction of the belt cord 46 included in the third belt ply 44C (hereinafter, referred to as the inclination direction of the third belt cord 46C). The inclination direction of the third belt cord 46C is equal to the inclination direction of the belt cord 46 included in the fourth belt ply 44D (hereinafter, referred to as the inclination direction of the fourth belt cord 46D). The inclination direction of the first belt cord 46A may be opposite to the inclination direction of the second belt cord 46B. The inclination direction of the third belt cord 46C may be opposite to the inclination direction of the fourth belt cord 46D.

In FIG. 2, the angle θ1 is the angle formed by the first belt cord 46A with respect to the circumferential direction (hereinafter, referred to as the inclination angle θ1). The angle θ2 is the angle formed by the second belt cord 46B with respect to the circumferential direction (hereinafter, referred to as the inclination angle θ2). The angle θ3 is the angle formed by the third belt cord 46C with respect to the circumferential direction (hereinafter, referred to as the inclination angle θ3). The angle θ4 is the angle formed by the fourth belt cord 46D with respect to the circumferential direction (hereinafter, referred to as the inclination angle θ4).

In the present invention, unless otherwise specified, the inclination angle of each belt cord 46 is represented by an angle formed by the belt cord 46 with respect to the equator plane.

As described above, the second belt ply 44B is the reference belt ply BP. The inclination angle θ2 of the second belt cord 46B is the inclination angle Ab of the belt cord 46 of the reference belt ply BP.

The inclination angle θ1 of the first belt cord 46A, the inclination angle θ2 of the second belt cord 46B, the inclination angle θ3 of the third belt cord 46C, and the inclination angle θ4 of the fourth belt cord 46D are preferably not less than 10 degrees and not greater than 60 degrees. The inclination angle θ1 of the first belt cord 46A is more preferably not less than 40 degrees and not greater than 60 degrees from the viewpoint of effectively restraining the movement of the tread portion T and obtaining a ground-contact surface having a stable shape with a small shape change. The inclination angle θ2 of the second belt cord 46B is more preferably not less than 15 degrees and not greater than 30 degrees, and still more preferably not less than 15 degrees and not greater than 20 degrees. The inclination angle θ3 of the third belt cord 46C is more preferably not less than 15 degrees and not greater than 30 degrees, and still more preferably not less than 15 degrees and not greater than 20 degrees. The inclination angle θ4 of the fourth belt cord 46D is more preferably not less than 15 degrees and not greater than 50 degrees.

From the viewpoint of effectively restraining the movement of the tread portion T and obtaining a ground-contact surface having a stable shape with a small shape change, the inclination direction of the third belt cord 46C is opposite to the inclination direction of the second belt cord 46B, but the inclination angle θ3 of the third belt cord 46C is preferably substantially equal to the inclination angle θ2 of the second belt cord 46B. The fact that the inclination angle θ3 of the third belt cord 46C is substantially equal to the inclination angle θ2 of the second belt cord 46B means that the absolute value of the difference between the inclination angle θ3 and the inclination angle θ2 is within 3 degrees.

The band 42 includes at least one full band 50. The band 42 of the tire 2 includes one full band 50. The number of full bands 50 forming the band 42 may be two, or may be three or more. The band 42 may further include a pair of edge bands disposed separated from each other axially with the equator plane interposed therebetween.

In FIG. 1, the length indicated by the double-pointed arrow WF is the axial width of the full band 50. The axial width WF of the full band 50 is represented by the axial distance from one end to the other end of the full band 50. As described above, the band 42 of the tire 2 includes one full band 50. The axial width WF of the full band 50 is also the axial width of the band 42 of the tire 2.

As shown in FIG. 1, the full band 50 of the tire 2 is wider than the fourth belt ply 44D, but narrower than the first belt ply 44A, the second belt ply 44B, and the third belt ply 44C. The band 42 of the tire 2 is narrower than the belt 40. The end of the band 42 is positioned axially inside the end of the belt 40.

As shown in FIG. 2, the full band 50 included in the band 42 includes a band cord 52. In FIG. 2, the band cord 52 is represented by a solid line for convenient description, but the band cord 52 is covered with band topping rubber 54. The cord count of the band 42 is not less than 15 ends/50 mm and not greater than 40 ends/50 mm.

Although not described in detail, the tire 2 is produced with a known method. The band 42 is formed using the band strip 56 shown in FIG. 3. The band strip 56 has a band shape. The band strip 56 includes one or more band cords 52. The band strip 56 shown in FIG. 3 includes 5 band cords 52. These band cords 52 are arranged in the width direction of the band strip 56 and extend in the length direction of the band strip 56. The band strip 56 includes a cord array in which one or more band cords 52 are arranged.

The number of band cords 52 included in the band strip 56 is preferably 5 or less, and more preferably 3 or less. The number of band cords 52 is preferably 2 or more.

As will be described below, the band 42 is formed by helically winding the band strip 56. The band 42 includes a

helically wound band cord 52. The band cord 52 is slightly inclined with respect to the circumferential direction. In FIG. 2, the angle θd is the angle formed by the band cord 52 with respect to the circumferential direction (hereinafter, referred to as the inclination angle θd). The inclination angle θd of the band cord 52 is preferably not greater than 5 degrees. The band cord 52 extends substantially in the circumferential direction. The band 42 has a jointless structure.

In the present invention, unless otherwise specified, the inclination angle θd of the band cord 52 is represented by an angle formed by the band cord 52 with respect to the equator plane.

FIG. 4 shows the full band 50 included in the band 42. The full band 50 is formed by helically winding the band strip 56 from one end (hereinafter, referred to as first end FE1) to the other end (hereinafter, referred to as second end FE2) in the axial direction. When a front end BS1 of the band strip 56 in the length direction is set at a position corresponding to the first end FE1 of the full band 50, the formation of the full band 50 is started. When a rear end BS2 of the band strip 56 in the length direction reaches a position corresponding to the second end FE2 of the full band 50, the formation of the full band 50 is completed. The full band 50 is a crosslinked product of a band formed product formed by helically winding the band strip 56. The full band 50 includes the front end BS1 and the rear end BS2 of the band strip 56.

As shown in FIG. 4, the band strip 56 is wound so that the portion of the front end BS1 and the portion of the rear end BS2 of the band strip 56 overlap with each other axially. The circumferential position of the front end BS1 does not coincide with the circumferential position of the rear end BS2. The band strip 56 may be wound so that the circumferential position of the front end BS1 coincides with the circumferential position of the rear end BS2.

In the zone from the front end BS1 to the rear end BS2 of the band strip 56 indicated by the reference sign LZ in FIG. 4, the portion of the front end BS1 and the portion of the rear end BS2 of the band strip 56 overlap with each other. The zone LZ in which the portion of the front end BS1 and the portion of the rear end BS2 of the band strip 56 overlap with each other is referred to as the overlap zone of the band strip 56. The full band 50 of the tire 2 includes an overlap zone LZ of the band strip 56.

FIG. 5 shows a state in which the full band 50 shown in FIG. 4 is viewed from the second end FE2 side. The direction perpendicular to the paper surface of FIG. 5 is the axial direction of the tire 2. The position indicated by the reference sign RA is the rotation axis of the tire 2. FIG. 5 shows the contour of the tire 2 by a two-dot chain line.

The size of the overlap zone LZ of the band strip 56 in the full band 50 is represented by the angle formed by the line segment connecting the front end BS1 of the band strip 56 and the rotation axis RA and the line segment connecting the rear end BS2 of the band strip 56 and the rotation axis RA, that is, the central angle. The angle θp in FIG. 5 is the central angle of the overlap zone LZ of the band strip 56. In a case where the circumferential position of the front end BS1 and the circumferential position of the rear end BS2 of the band strip 56 coincide with each other, the central angle θp is 0 degrees. In the present invention, the axial width WF of the full band 50 described above is represented by the axial width of the full band 50 in a zone other than the overlap zone LZ.

As described above, the band 42 of the tire 2 includes at least one full band 50. The full band 50 is a constitutional element of the tire 2, and includes the band strip 56 that is helically wound. The band 42 includes at least one full band 50 composed of the band strip 56 that is helically wound.

In the present invention, among the at least one full band composing the band, a full band having a widest axial width is defined as a reference full band.

As described above, the band 42 of the tire 2 is composed of one full band 50. Among the at least one full band 50 composing the band 42, the full band 50 is the reference full band BF having the widest axial width. The inclination angle θd of the band cord 52 of the full band 50 described above is the inclination angle Aj of the band cord 52 of the reference full band BF. The axial width WF of the full band 50 described above is the axial width Wj of the reference full band BF of the tire 2.

The band cord 52 of the full band 50 in the tire 2 is made of steel. A material of the band cord 52 in the reference full band BF is steel.

As described above, the band 42 includes at least one full band 50. In a case where the band 42 includes two or more full bands 50, the band cord 52 of the full band 50 other than the reference full band BF may be an organic fiber cord. In this case, examples of the organic fiber include nylon fibers, rayon fibers, polyester fibers, and aramid fibers. From the viewpoint of ensuring stiffness of the tread portion T, the band cords 52 of all the full band 50 forming the band 42 are preferably steel cords as in the tire 2.

As described above, the rubber component of the rubber composition forming the tread 4 (specifically, the cap portion 28) contains styrene butadiene rubber (SBR), and the amount CSBR of the SBR in 100 parts by mass of the rubber component is not less than 40 parts by mass. The Tg of the rubber component becomes high, and the road surface following property in a micro-deformation region is improved. The tread 4 of the tire 2 can contribute to improvement in wet performance.

As described above, the rubber composition for the tread 4 contains carbon black and silica as fillers, and the amount BCB of the carbon black is less than the amount BSi of the silica. The amount BSi of the silica is large, and the amount BCB of the carbon black is small. The silica can contribute to suppressing an increase in energy loss caused by a rubber component containing a large amount of SBR. The tire 2 can be improved in wet performance while maintaining low

rolling resistance.

Silica contained in a large amount affects the wear resistance performance. However, as described above, the rubber component of the tread 4 contains isoprene-based rubber, and the amount CNR of the isoprene-based rubber in 100 parts by mass of the rubber component is not less than 30 parts by mass. The isoprene-based rubber increases the strength of the tread 4. Thus, occurrence of wear due to the strength of the tread 4 is suppressed.

As described above, the reinforcing layer 14 includes the band 42, and the band 42 includes the reference full band BF including a steel cord as the band cord 52. The reinforcing layer 14 can contribute to suppressing the dimensional growth of the tire 2. A change in the ground-contact shape is suppressed. Occurrence of wear due to the change in the ground-contact shape is also suppressed.

Furthermore, in the tire 2, the amount CNR of the isoprene-based rubber, the amount BCB of the carbon black, and the ratio (Wj/Wt) are set to satisfy the following relational expression as described above.

$$(CNR + BCB) \times (Wj/Wt) \geq 27.0$$

Thus, the strength of the tread 4 and the holding force by the reinforcing layer 14 are effectively increased.

The tire 2 can be improved in wear resistance performance in spite of the increase in the amount of silica that disadvantageously acts on the wear resistance performance.

The tire 2 can achieve improvement in wet performance and wear resistance performance while maintaining low rolling resistance.

From the viewpoint of improving wet performance and wear resistance performance, the amount CNR, the amount BCB, and the ratio (Wj/Wt) preferably satisfy the following relational expression.

$$(CNR + BCB) \times (Wj/Wt) \geq 30.0$$

From a similar viewpoint, the product (CNR + BCB) × (Wj/Wt) of the sum (CNR + BCB) of the amount CNR of the isoprene-based rubber and the amount BCB of the carbon black and the ratio (Wj/Wt) is more preferably not less than 35.0, still more preferably not less than 40.0, still more preferably not less than 45.0, still more preferably not less than 50.0, still more preferably not less than 55.0, and still more preferably not less than 60.0.

From the viewpoint of maintaining low rolling resistance and good wet performance, the amount CNR, the amount BCB, and the ratio (Wj/Wt) preferably satisfy the following relational expression.

$$(CNR + BCB) \times (Wj/Wt) \leq 120.0$$

From a similar viewpoint, the product (CNR + BCB) × (Wj/Wt) is more preferably not greater than 110.0, still more preferably not greater than 100.0, still more preferably not greater than 90.0, still more preferably not greater than 80.0, and still more preferably not greater than 70.0.

The ratio (Wj/Wt) of the axial width Wj of the reference full band BF to the axial width Wt of the tread 4 is preferably not less than 0.60. Thus, the band 42 can contribute to suppressing the dimensional growth of the tire 2. The tire 2 can be improved in wear resistance performance. From this viewpoint, the ratio (Wj/Wt) is more preferably not less than 0.70. The ratio (Wj/Wt) is preferably not greater than 0.90, and more preferably not greater than 0.80 from the viewpoint of suppressing occurrence of damage due to concentration of strain at the end of the reference full band BF.

The ratio (Wb/Wt) of the axial width Wb of the reference belt ply BP to the axial width Wt of the tread 4 is preferably not less than 0.70. Thus, the belt 40 can contribute to suppressing the dimensional growth of the tire 2. The tire 2 can be improved in wear resistance performance. From this viewpoint, the ratio (Wb/Wt) is more preferably not less than 0.80. The ratio (Wb/Wt) is preferably not greater than 0.95, and more preferably not greater than 0.90 from the viewpoint of suppressing occurrence of damage due to concentration of strain at the end of the reference belt ply BP.

The ratio (Wj/Wb) of the axial width Wj of the reference full band BF to the axial width Wb of the reference belt ply BP is preferably not less than 0.60. Thus, the band 42 can contribute to suppressing the dimensional growth of the tire 2. The tire 2 can be improved in wear resistance performance. From this viewpoint, the ratio (Wj/Wb) is more preferably not less than 0.70. The ratio (Wj/Wb) is preferably not greater than 0.90, and more preferably not greater than 0.80 from the viewpoint of suppressing occurrence of damage due to concentration of strain at the end of the reference full band BF.

The inclination angle Aj of the band cord 52 of the reference full band BF and the inclination angle Ab of the belt cord 46 of the reference belt ply BP preferably satisfy the following relational expression.

$$Aj + Ab \leq 25$$

Thus, the reinforcing layer 14 can contribute to suppressing the dimensional growth of the tire 2. The tire 2 can be improved in wear resistance performance. From this viewpoint, the total of the inclination angle Aj and the inclination angle Ab (Aj + Ab) is preferably not greater than 20 degrees. From the viewpoint of reducing strain generated between the carcass 12 and the reinforcing layer 14, the total of the inclination angle Aj and the inclination angle Ab (Aj + Ab) is preferably not less than 15 degrees.

The inclination angle Aj of the band cord 52 of the reference full band BF is preferably not less than 0 degrees and not greater than 5 degrees. Thus, the band 42 can contribute to suppressing the dimensional growth of the tire 2. The tire 2 can be improved in wear resistance performance. From this viewpoint, the inclination angle Aj is more preferably not less than 0 degrees and not greater than 3 degrees.

The inclination angle Ab of the belt cord 46 of the reference belt ply BP is preferably not greater than 30 degrees. Thus, the belt 40 can contribute to suppressing the dimensional growth of the tire 2. The tire 2 can be improved in wear resistance performance. From this viewpoint, the inclination angle Ab is more preferably not greater than 20 degrees.

As described above, the carcass 12 has a radial structure. From the viewpoint of reducing strain based on the angle difference from the carcass cord included in the carcass 12, the inclination angle Ab is preferably not less than 15 degrees.

The cord count Ej of the reference full band BF is preferably not less than 20 ends/50 mm. Thus, the band 42 can contribute to suppressing the dimensional growth of the tire 2. The tire 2 can be improved in wear resistance performance. From this viewpoint, the cord count Ej is more preferably not less than 23 ends/50 mm.

The cord count Ej of the reference full band BF is preferably not greater than 35 ends/50 mm. Thus, an impact of the reference full band BF on the weight of the tire 2 is suppressed. The tire 2 can maintain low rolling resistance. From this viewpoint, the cord count Ej is more preferably not greater than 32 ends/50 mm.

The cord count Eb of the reference belt ply BP is preferably not less than 15 ends/50 mm. Thus, the belt 40 can contribute to suppressing the dimensional growth of the tire 2. The tire 2 can be improved in wear resistance performance. From this viewpoint, the cord count Eb is more preferably not less than 19 ends/50 mm.

The cord count Eb of the reference belt ply BP is preferably not greater than 30 ends/50 mm. Thus, an impact of the reference belt ply BP on the weight of the tire 2 is suppressed. The tire 2 can maintain low rolling resistance. From this viewpoint, the cord count Eb is more preferably not greater than 28 ends/50 mm, and still more preferably not greater than 26 ends/50 mm.

The cord count Ej of the reference full band BF is preferably greater than the cord count Eb of the reference belt ply BP. Thus, the band 42 can contribute to suppressing the dimensional growth of the tire 2. The tire 2 can be improved in wear resistance performance. From this viewpoint, the ratio (Ej/Eb) of the cord count Ej of the reference full band BF to the cord count Eb of the reference belt ply BP is preferably not less than 1.05, and more preferably not less than 1.10.

The ratio (Ej/Eb) is preferably not greater than 1.45. Thus, an impact of the reference full band BF on the weight of the tire 2 is suppressed. The tire 2 can maintain low rolling resistance. From this viewpoint, the ratio (Ej/Eb) is more preferably not greater than 1.30.

The central angle θp of the overlap zone LZ of the band strip 56 in the reference full band BF is preferably not greater than 150 degrees. Thus, although the reference full band BF including the band strip 56 that is wound has a wide portion and a narrow portion to cause vibration during running at a high speed, the vibration is effectively suppressed. A change in a ground-contact shape is suppressed, so that occurrence of wear due to the change in the ground-contact shape is also suppressed. From this viewpoint, the central angle θp is more preferably not greater than 120 degrees, still more preferably not greater than 90 degrees, and particularly preferably not greater than 45 degrees. The central angle θp may be 0 degrees.

As shown in FIG. 1, the reference full band BF is positioned between the second belt ply 44B and the third belt ply 44C radially. As described above, the inclination direction of the third belt cord 46C is opposite to the inclination direction of the second belt cord 46B. The reference full band BF of the tire 2 is positioned between the second belt ply 44B and the third belt ply 44C that include belt cords 46 inclined in opposite directions.

In the present invention, in a case where the reference full band BF is positioned between two belt plies including belt cords inclined in opposite directions, the belt ply positioned radially inside the reference full band BF is referred to as the inner belt ply, and the belt ply positioned radially outside the reference full band BF is referred to as the outer belt ply.

In the tire 2, the second belt ply 44B is the inner belt ply, and the third belt ply 44C is the outer belt ply.

In the present invention, in a case where the inner belt ply is the reference belt ply BP, the outer belt ply is referred to as the sub-reference belt ply BPs, and in a case where the outer belt ply is the reference belt ply BP, the inner belt ply is referred to as the sub-reference belt ply BPs. The sub-reference belt ply BPs is a belt ply that is positioned adjacent to the reference belt ply BP radially and includes the belt cord inclined in a direction opposite to the inclination direction of the belt cord of the reference belt ply BP.

In the tire 2, the second belt ply 44B that is the inner belt ply is the reference belt ply BP, and thus the third belt ply 44C that is the outer belt ply is the sub-reference belt ply BPs.

The reference full band BF of the tire 2 is positioned between the reference belt ply BP and the sub-reference belt

ply BPs that include belt cords 46 inclined in opposite directions. The reinforcing layer 14 including the reference belt ply BP, the sub-reference belt ply BPs, and the reference full band BF can effectively contribute to suppressing the dimensional growth of the tire 2.

The band cord 52 included in the reference full band BF extends substantially circumferentially, and the belt cord 46 included in the sub-reference belt ply BPs is disposed so as to intersect the belt cord 46 included in the reference belt ply BP, and thus the shear strain generated in the rubber positioned between the band cord 52 and the belt cord 46 is reduced. The reference full band BF can stably and continuously exhibit the function of suppressing the dimensional growth. The tire 2 can be improved in wear resistance performance. From this viewpoint, it is preferable that the belt ply 44 having the widest axial width of the at least one belt ply 44 composing the belt 40 is the reference belt ply BP, the belt ply 44 that is positioned adjacent to the reference belt ply BP radially and includes the belt cord 46 inclined in a direction opposite to the inclination direction of the belt cord 46 of the reference belt ply BP is the sub-reference belt ply BPs, and the reference full band BF is positioned between the reference belt ply BP and the sub-reference belt ply BPs radially. In this case, it is more preferable that the reference belt ply BP is positioned radially inside the reference full band BF and the sub-reference belt ply BPs is positioned radially outside the reference full band BF.

The full band 50 shown in FIG. 4, that is, the reference full band BF is formed by helically winding the band strip 56 from the first end FE1 toward the second end FE2 counterclockwise as viewed from the second end FE2 side. Therefore, the band cord 52 of the reference full band BF is slightly inclined with respect to the circumferential direction. In the reinforcing layer 14 shown in FIG. 2, the inclination direction of the band cord 52 included in the reference full band BF is opposite to the inclination direction of the belt cord 46 included in the reference belt ply BP. The inclination direction of the band cord 52 included in the reference full band BF may be equal to the inclination direction of the belt cord 46 included in the reference belt ply BP.

In the tire 2, the reinforcing layer 14 is formed so that the inclination direction of the band cord 52 included in the reference full band BF is opposite to the inclination direction of the belt cord 46 included in the reference belt ply BP, and thus the shear strain generated in the rubber positioned between the band cord 52 and the belt cord 46 is effectively reduced. Therefore, the reinforcing layer 14 can stably and continuously exhibit the function of suppressing the dimensional growth of the tire 2. The tire 2 can be improved in wear resistance performance. From this viewpoint, the inclination direction of the band cord 52 included in the reference full band BF is preferably opposite to the inclination direction of the belt cord 46 included in the reference belt ply BP.

As shown in FIG. 1, the reference full band BF and the reference belt ply BP are arranged directly adjacent to each other radially. In FIG. 1, the reference belt ply BP is positioned radially inside the reference full band BF. If the reference full band BF and the reference belt ply BP are arranged directly adjacent to each other radially, the reference belt ply BP may be positioned radially outside the reference full band BF.

In the tire 2, the reference full band BF and the reference belt ply BP are arranged directly adjacent to each other radially, and thus the reinforcing layer 14 can contribute to suppressing the dimensional growth of the tire 2. The tire 2 can be improved in wear resistance performance. From this viewpoint, the reference full band BF and the reference belt ply BP are preferably arranged directly adjacent to each other radially.

As shown in FIG. 1, not only the reference full band BF and the reference belt ply BP but also the reference full band BF and the sub-reference belt ply BPs are arranged directly adjacent to each other radially. Thus, the reinforcing layer 14 can effectively contribute to suppressing the dimensional growth of the tire 2. The tire 2 can be improved in wear resistance performance. From this viewpoint, in a case where the reference full band BF and the reference belt ply BP are arranged directly adjacent to each other radially, it is more preferable that the reference full band BF and the sub-reference belt ply BPs are also arranged directly adjacent to each other radially. In this case, it is more preferable that the reference belt ply BP is positioned radially inside the reference full band BF and the sub-reference belt ply BPs is positioned radially outside the reference full band BF.

FIG. 6 shows a part of the section of FIG. 1. FIG. 6 shows a section of the reinforcing layer 14 in the equator plane.

In FIG. 6, the length indicated by the double-pointed arrow DBC is the inter-cord distance between the band cord 52 of the reference full band BF and the belt cord 46 of the reference belt ply BP. The inter-cord distance DBC represents the thickness of the rubber component positioned between the band cord 52 of the reference full band BF and the belt cord 46 of the reference belt ply BP.

In FIG. 6, the length indicated by the double-pointed arrow DBCs is the inter-cord distance between the band cord 52 of the reference full band BF and the belt cord 46 of the sub-reference belt ply BPs. The inter-cord distance DBCs represents the thickness of the rubber component positioned between the band cord 52 of the reference full band BF and the belt cord 46 of the sub-reference belt ply BPs.

In the tire 2, the inter-cord distance DBC is preferably not less than 0.36 mm and not greater than 1.25 mm, and more preferably not less than 0.38 mm and not greater than 1.20 mm from the viewpoint that the reinforcing layer 14 can effectively contribute to improvement in wear resistance performance.

From a similar viewpoint, the inter-cord distance DBCs is preferably not less than 0.36 mm and not greater than 1.25 mm, and more preferably not less than 0.38 mm and not greater than 1.20 mm.

As described above, the groove 24 is carved on the tread 4 of the tire 2. Thus, a tread pattern is formed. The tread 4 includes the tread pattern.

FIG. 7 is a plan view in which a part of the tread 4 is developed. FIG. 7 shows an example of the tread pattern. The tread pattern shown in FIG. 7 is a tread pattern of the tire 2 that is new and not worn. In the tread surface 22, the portion other than the groove 24 is also referred to as a land surface 58.

FIG. 8 shows a section of the groove 24. The section of the groove 24 shown in FIG. 8 is a section of the groove 24 along a flat surface perpendicular to the length direction of the groove 24. The section of the groove 24 is a section of the shoulder circumferential groove described below. The main configuration of the groove 24 will be described with reference to FIG. 8.

The groove 24 includes a pair of wall surfaces 24S including a groove opening 24M and a bottom surface 24B including a groove bottom 24T. The groove opening 24M includes a pair of edges 24E. In other words, the groove opening 24M includes the pair of edges 24E. Each edge 24E is a boundary between the land surface 58 and the groove 24. Each of the pair of wall surfaces 24S extends between the edge 24E and the bottom surface 24B.

Unless otherwise specified, a flat surface including the groove opening 24M is a reference surface RP, and the groove bottom 24T is represented by a position at which the distance measured along a normal line of the reference surface RP from the reference surface RP to the bottom surface 24B is maximum. In a case where the bottom surface 24B is a flat surface, the groove bottom 24T is represented by the width center of the bottom surface 24B. In a case where a protrusion is provided on the bottom surface 24B, the groove bottom 24T is specified based on a virtual bottom surface obtained by assuming that there is no protrusion.

A normal line of the reference surface RP connecting the reference surface RP and the groove bottom 24T is a reference normal line RN, and the direction of the reference normal line RN is the depth direction of the groove 24.

The width of the groove 24 is represented by the distance between one wall surface 24S and the other wall surface 24S (hereinafter, referred to as the distance between wall surfaces). The distance between wall surfaces is measured along a line orthogonal to the reference normal line RN unless otherwise specified. In a case where the profile of the tread surface 22 can be confirmed, the groove bottom 24T and the width of the groove 24 may be specified using the profile of the tread surface 22 as the reference surface RP.

In FIG. 8, the length indicated by the double-pointed arrow WG is the width of the groove 24 in the groove opening 24M. In a case where a portion at the groove opening 24M of the groove 24 is processed to be tapered, the width at the groove opening 24M of the groove 24 is represented based on a virtual edge obtained by assuming that the portion is not processed to be tapered. The length indicated by the double-pointed arrow DG is the depth of the groove 24. The depth DG of the groove 24 is represented by the distance measured along the reference normal line RN from the reference surface RP to the groove bottom 24T of the groove 24 unless otherwise specified. The position, the width WG, and the depth DG of the groove 24 are appropriately determined according to the specifications of the tire 2.

The groove 24 having a width WG of less than 1.0 mm at the groove opening 24M is referred to as a sipe. The groove 24 other than the sipe is referred to as an ordinary groove. The ordinary groove has a width WG of not less than 1.0 mm at the groove opening 24M.

When a tire treads a road surface, the tread is deformed. An ordinary groove having a wide width and having a pair of wall surfaces that are not in contact with each other even when the tread is deformed is also referred to as a main groove even though the groove is an ordinary groove. An ordinary groove having a narrow width and having a pair of wall surfaces that can be in contact with each other when the tread is deformed is also referred to as a narrow groove.

The tread 4 of the tire 2 includes a plurality of circumferential grooves 60. The plurality of circumferential grooves 60 are arranged axially. The plurality of circumferential grooves are disposed symmetrically with respect to the equator plane.

Each circumferential groove 60 is continuous circumferentially. The circumferential groove 60 of the tire 2 extends straight in the circumferential direction. The circumferential groove 60 may be formed so as to extend zigzag in the circumferential direction.

As shown in FIG. 7, the tread 4 of the tire 2 includes five circumferential grooves 60. The five circumferential grooves 60 include two circumferential grooves 60 that are positioned on the axially outermost side and are shoulder circumferential grooves 62. The circumferential groove 60 positioned on the equator plane is a center circumferential groove 64. The circumferential groove 60 positioned between the center circumferential groove 64 and the shoulder circumferential groove 62 is a middle circumferential groove 66. The tread 4 of the tire 2 includes the center circumferential groove 64, a pair of middle circumferential grooves 66, and a pair of shoulder circumferential grooves 62. In a case where the circumferential groove 60 is absent on the equator plane, the circumferential groove 60 closest to the equator plane of the circumferential grooves 60 positioned in the zone between the equator plane and the end TE of the tread surface 22 is referred to as the center circumferential groove.

The tread 4 of the tire 2 includes a plurality of land portions 68 separated by the circumferential grooves 60. As shown in FIG. 7, the tread 4 of the tire 2 includes six land portions 68. The six land portions 68 include two land portions 68 that are positioned on the axially outermost side and are shoulder land portions 70. The shoulder land portion 70 includes

the end TE of the tread surface 22. The land portion 68 closest to the equator plane of the land portions 68 positioned in the zone between the equator plane and the end TE of the tread surface 22 is a center land portion 72. The land portion 68 positioned between the center land portion 72 and the shoulder land portion 70 is a middle land portion 74. The tread 4 of the tire 2 includes a pair of center land portions 72, a pair of middle land portions 74, and a pair of shoulder land portions 70. In a case where the land portion 68 is positioned on the equator plane, the land portion 68 positioned on the equator plane is referred to as the center land portion.

FIG. 8 shows a section of the shoulder circumferential groove 62. FIG. 9 shows a section of the middle circumferential groove 66. Although not illustrated, the center circumferential groove 64 has a shape similar to the shape of the shoulder circumferential groove 62.

The circumferential grooves 60 provided in the tread 4 of the tire 2 include two kinds of circumferential grooves 60 having different shapes, that is, a circumferential main groove 76 and a circumferential narrow groove 78.

FIG. 8 shows a section of the circumferential main groove 76. The circumferential main groove 76 is the above-described main groove. A pair of wall surfaces 76S of the circumferential main groove 76 are not in contact with each other even when the tread 4 is in contact with a road surface and deformed.

The width WGm of the circumferential main groove 76 at a groove opening 76M is preferably not less than 2% and not greater than 10% of the axial width Wt of the tread 4 from the viewpoint of contribution to drainage performance and traction performance. The depth DGm of the circumferential main groove 76 is, for example, not less than 10 mm and not greater than 21 mm. From the viewpoint that the tire 2 can exhibit good wet performance, the depth DGm is preferably not less than 13 mm and not greater than 18 mm.

FIG. 9 shows a section of the circumferential narrow groove 78. The circumferential narrow groove 78 includes a pair of wall surfaces 78S including a groove opening 78M and a bottom surface 78B including a groove bottom 78T. The dashed line LC is the center line of the circumferential narrow groove 78. The circumferential narrow groove 78 of the tire 2 has a sectional shape symmetrical with respect to the center line LC. The center line LC extends in the depth direction of the circumferential narrow groove 78 and passes through the groove bottom 78T. The circumferential narrow groove 78 may have a sectional shape asymmetrical with respect to the center line LC.

The circumferential narrow groove 78 includes a body portion 80 and an enlarged width portion 82. The body portion 80 includes the groove opening 78M of the circumferential narrow groove 78. The enlarged width portion 82 includes the groove bottom 78T of the circumferential narrow groove 78. When the tread 4 is worn and the body portion 80 disappears, the enlarged width portion 82 is exposed. In FIG. 9, the length indicated by the double-pointed arrow WC1 is the minimum width of the circumferential narrow groove 78, and the length indicated by the double-pointed arrow WC2 is the maximum width of the circumferential narrow groove 78. The circumferential narrow groove 78 has the minimum width WC1 in the body portion 80, and has the maximum width WC2 in the enlarged width portion 82.

The body portion 80 includes a narrow groove portion 84. The narrow groove portion 84 of the tire 2 extends from the groove opening 78M of the circumferential narrow groove 78 in the depth direction of the circumferential narrow groove 78. The narrow groove portion 84 includes the groove opening 78M of the circumferential narrow groove 78. The body portion 80 has the minimum width WC1 in the narrow groove portion 84. The minimum width WC1 is set so that when the tread 4 is in contact with a road surface and deformed, the pair of wall surfaces 78S of the circumferential narrow groove 78 are in contact with each other in the narrow groove portion 84.

The narrow groove portion 84 has a portion extending straight in the depth direction (hereinafter, also referred to as a straight portion 86). In the narrow groove portion 84, the straight portion 86 is a portion having the width WC1 that is constant in the depth direction. The narrow groove portion 84 includes the straight portion 86 having the width WC1 that is constant in the depth direction. Although not illustrated, for example, the narrow groove portion 84 may be formed so as to have a width that is gradually increased from a position at which the narrow groove portion 84 has the minimum width WC1 toward each of the groove opening 78M and the enlarged width portion 82.

The enlarged width portion 82 is positioned radially inside the body portion 80. The enlarged width portion 82 has a width larger than the width of the body portion 80. The position indicated by the reference sign PX is a position at which the enlarged width portion 82 has the maximum width WC2 (hereinafter, referred to as a maximum width position PX). The enlarged width portion 82 is tapered outward from the maximum width position PX, and is tapered inward from the maximum width position PX.

The position indicated by the solid line LPE in FIG. 9 is the boundary between the body portion 80 (specifically, the narrow groove portion 84) and the enlarged width portion 82. The boundary LPE is represented by the position at which the circumferential narrow groove 78 has a width Wc that is 1.1 times the minimum width WC1 of the narrow groove portion 84. In a case where the portion having the width Wc that is 1.1 times the minimum width WC1 has a constant length, the radially outer end of the portion is the boundary LPE.

The enlarged width portion 82 of the tire 2 includes an inflection portion 88 and a bottom portion 90. The enlarged width portion 82 has the maximum width WC2 in the bottom portion 90. The position indicated by the reference sign H4 in FIG. 9 is the boundary between the inflection portion 88 and the bottom portion 90.

The inflection portion 88 connects the narrow groove portion 84 and the bottom portion 90. The width of the

inflection portion 88 gradually increases from the boundary LPE with the narrow groove portion 84 toward the boundary H4 with the bottom portion 90. The inflection portion 88 is curved to be depressed inward from the outside of the inflection portion 88. Specifically, in a section of the circumferential narrow groove 78, the contour of the inflection portion 88 is represented by an arc. In FIG. 9, the arrow RC1 is a radius of the arc representing the contour of the inflection portion 88. The arc representing the contour of the inflection portion 88 is tangent to the straight line representing the contour of the straight portion 86 at the boundary H3 between the inflection portion 88 and the straight portion 86.

The bottom portion 90 is positioned radially inside the inflection portion 88. The bottom portion 90 includes the groove bottom 78T of the circumferential narrow groove 78. In the section of the circumferential narrow groove 78 shown in FIG. 9, the contour of the bottom portion 90 of the tire 2 is represented by a single arc having a radius Rw. The center of the arc representing the contour of the bottom portion 90 is positioned on the center line LC of the circumferential narrow groove 78. The radius Rw of the arc representing the contour of the bottom portion 90 is equal to half the length of the maximum width WC2 of the enlarged width portion 82. The arc representing the contour of the bottom portion 90 is tangent to the arc representing the contour of the inflection portion 88 at the boundary H4.

In FIG. 9, the length indicated by the double-pointed arrow D1 is the depth of the circumferential narrow groove 78. The length indicated by the double-pointed arrow D2 is the depth of the body portion 80 of the circumferential narrow groove 78. The groove depth D2 is represented by the distance from the groove opening 78M to the boundary LPE in the circumferential narrow groove 78 in the depth direction. The length indicated by the double-pointed arrow D3 is the depth from the groove opening 78M to the position PX at which the enlarged width portion 82 has the maximum width WC2 in the circumferential narrow groove 78.

The circumferential narrow groove 78 of the tire 2 has the depth D1 that is equal to the depth DGm of the circumferential main groove 76, or the circumferential narrow groove 78 is shallower than the circumferential main groove 76. Specifically, the ratio D1/DGm of the depth D1 of the circumferential narrow groove 78 to the groove depth DGm of the circumferential main groove 76 is not less than 0.75 and not greater than 1.00.

In the tire 2, when the tread 4 is in contact with a road surface and deformed, the pair of wall surfaces 78S of the circumferential narrow groove 78 are in contact with each other in the narrow groove portion 84. The land portions 68 positioned on both sides of the circumferential narrow groove 78 support each other to suppress deformation of the tread 4. In the initial stage of wear, the narrow groove portion 84 of the circumferential narrow groove 78 contributes to suppressing deformation of the tread 4. The circumferential narrow groove 78 apparently enhances the stiffness of the tread 4. The tire 2 can be further improved in wear resistance performance while maintaining good wet performance.

In the tire 2, the maximum width WC2 of the enlarged width portion 82 is larger than the minimum width WC1 of the narrow groove portion 84. The enlarged width portion 82 having a wide width is provided radially inside the narrow groove portion 84 of the circumferential narrow groove 78. After the narrow groove portion 84 disappears, the enlarged width portion 82 is exposed. In the middle stage of wear in which the narrow groove portion 84 disappears, the exposed enlarged width portion 82 can contribute to suppressing deterioration of wet performance. The volume of the tread 4 is reduced by wear. The deformation allowance of the tread 4 is decreased, and thus the stiffness of the tread 4 is apparently enhanced. Good wear resistance performance is maintained even in the middle stage of wear.

The tire 2 can achieve both wet performance and wear resistance performance while maintaining low rolling resistance from the start of use until the tire 2 needs to be replaced with a next new tire 2. From this viewpoint, at least one of the plurality of circumferential grooves 60 provided in the tread 4 is preferably the circumferential narrow groove 78. In this case, it is preferable that the circumferential narrow groove 78 includes the narrow groove portion 84 and the enlarged width portion 82, the maximum width WC2 of the enlarged width portion 82 is larger than the minimum width WC1 of the narrow groove portion 84, and when the tread 4 is in contact with a road surface and deformed, the pair of wall surfaces 78S of the circumferential narrow groove 78 are in contact with each other in the narrow groove portion 84.

When at least one of a plurality of circumferential grooves 60 provided in the tread 4 is the circumferential narrow groove 78, the circumferential groove 60 other than the circumferential narrow groove 78 is the circumferential main groove 76.

In the tire 2, the center circumferential groove 64 and the shoulder circumferential groove 62 are the circumferential main grooves 76, and the middle circumferential groove 66 is the circumferential narrow groove 78.

Although not illustrated, the center circumferential groove 64 may be the circumferential narrow groove 78, and the shoulder circumferential groove 62 may be the circumferential narrow groove 78. If the center circumferential groove 64 or the shoulder circumferential groove 62 is the circumferential narrow groove 78, the middle circumferential groove 66 may be the circumferential main groove 76. From the viewpoint of maintaining good wet performance, at least the shoulder circumferential groove 62 positioned on the axially outermost side is preferably the circumferential main groove 76 as in the tire 2. In this case, from the viewpoint of reduction in rolling resistance and improvement in wear resistance performance, one or more circumferential grooves 60 positioned between two circumferential main grooves 76 preferably include at least one circumferential groove 60 that is the circumferential narrow groove 78. In a case where the tire 2 is mounted on a steer shaft of a vehicle, at least three circumferential grooves 60 are preferably provided between two circumferential main grooves 76, and among the at least three circumferential grooves 60, the circumferential groove 60 positioned at the center

is preferably the circumferential main groove 76, and the circumferential grooves 60 positioned on both sides of the circumferential main groove 76 are preferably the circumferential narrow grooves 78. In a case where the tire 2 is mounted on a drive shaft of a vehicle, at least two circumferential grooves 60 are preferably provided between two circumferential main grooves 76, and all of the at least two circumferential grooves 60 are preferably the circumferential narrow grooves 78.

As described above, the maximum width WC2 of the enlarged width portion 82 is larger than the minimum width WC1 of the narrow groove portion 84. From the viewpoint of maintaining good wet performance, the maximum width WC2 of the enlarged width portion 82 is preferably 2 times or more, and more preferably 3 times or more the minimum width WC1 of the narrow groove portion 84. From the viewpoint that an impact on the stiffness of the crown portion of the tread 4 is suppressed and the tire 2 can maintain good uneven wear resistance performance, the maximum width WC2 of the enlarged width portion 82 is preferably 8 times or less, and more preferably 7 times or less the minimum width WC1 of the narrow groove portion 84.

The minimum width WC1 of the narrow groove portion 84 is preferably not greater than 2.5 mm. Thus, when the tread 4 is in contact with a road surface and deformed, the pair of wall surfaces 78S of the circumferential narrow groove 78 can be effectively in contact with each other in the narrow groove portion 84. Deformation of the tread 4 is suppressed, and the tire 2 can be further improved in wear resistance performance. From this viewpoint, the minimum width WC1 is more preferably not greater than 2.0 mm. From the viewpoint that water existing between the tread 4 and a wet road surface is effectively drained through the circumferential narrow groove 78, the minimum width WC1 is preferably not less than 1.0 mm.

In the tire 2, the radius RC1 of the arc representing the contour of the inflection portion 88 is preferably larger than the radius Rw of the arc representing the contour of the bottom portion 90. Thus, the circumferential narrow groove 78 can sufficiently exhibit its function. From this viewpoint, the ratio RC1/Rw of the radius RC1 to the radius Rw is preferably not less than 1.5 and not greater than 20. From the viewpoint of improving wear resistance performance, the ratio RC1/Rw is more preferably not less than 2.0. From the viewpoint of maintaining good wet performance, the ratio RC1/Rw is more preferably not greater than 15.

The ratio D2/D1 of the depth D2 of the body portion 80 to the depth D1 of the circumferential narrow groove 78 is preferably not less than 0.25 and not greater than 0.70.

When the ratio D2/D1 is set to not less than 0.25, the groove depth D2 of the body portion 80 is appropriately maintained. When the tread 4 is in contact with a road surface and deformed, the pair of wall surfaces 78S of the circumferential narrow groove 78 can be sufficiently in contact with each other in the narrow groove portion 84. The tire 2 can be further improved in wear resistance performance. From this viewpoint, the ratio D2/D1 is more preferably not less than 0.30.

When the ratio D2/D1 is set to not greater than 0.70 in the tire 2, the enlarged width portion 82 having a necessary groove volume can be formed. The exposed enlarged width portion 82 can effectively contribute to suppressing deterioration of wet performance. From this viewpoint, the ratio D2/D1 is more preferably not greater than 0.65.

From the viewpoint that the enlarged width portion 82 can effectively contribute to suppressing deterioration of wet performance, the ratio D3/D1 of the groove depth D3 from the groove opening 78M to the position PX at which the enlarged width portion 82 has the maximum width WC2 in the circumferential narrow groove 78 to the groove depth D1 of the circumferential narrow groove 78 is preferably not less than 0.75 and not greater than 0.95.

As shown in FIG. 10, the portion of the groove opening 78M of the circumferential narrow groove 78 may be processed to be tapered. In this case, the body portion 80 of the circumferential narrow groove 78 includes a funnel portion 92 radially outside the narrow groove portion 84.

The funnel portion 92 can contribute to an increase in the groove volume of the circumferential narrow groove 78, and can effectively suppress concentration of strain on edges 78E of the land portions 68 positioned on both sides of the circumferential narrow groove 78. From this viewpoint, the body portion 80 of the circumferential narrow groove 78 preferably includes the funnel portion 92 including the groove opening 78M of the circumferential narrow groove 78 radially outside the narrow groove portion 84. In this case, the boundary LTP between the funnel portion 92 and the narrow groove portion 84 is represented by the position at which the circumferential narrow groove 78 has a width Wd that is 1.1 times the minimum width WC1 of the narrow groove portion 84 at the boundary portion between the funnel portion 92 and the narrow groove portion 84.

The width WA of the funnel portion 92 is preferably 0.15 times or more and 0.45 times or less the groove width WGm of the circumferential main groove 76.

The ratio D4/D1 of the depth D4 of the funnel portion 92 to the groove depth D1 of the circumferential narrow groove 78 is preferably not less than 0.12 and not greater than 0.14.

As described above, the tread 4 of the tire 2 includes the plurality of land portions 68 separated by the circumferential grooves 60.

In the tire 2, at least one of the plurality of land portions 68 includes a transverse sipe 102 traversing the land portion 68. The transverse sipe 102 extends between the circumferential grooves 60 positioned on both sides of the land

portion 68. The transverse sipe 102 is the above-described sipe. The transverse sipe 102 has a width of less than 1.0 mm at its groove opening 102M. The transverse sipe 102 has a groove width constant in the depth direction.

FIG. 11 shows a section of the transverse sipe 102. As shown in FIG. 11, the transverse sipe 102 extends zigzag in the depth direction. The transverse sipe 102 shown in FIG. 7 extends straight in the length direction, but as shown in FIG. 12, the transverse sipe 102 may be formed to extend zigzag in its length direction. The tire 2 can use, as the transverse sipes 102, a sipe extending straight in the length direction and extending zigzag in the depth direction (first sipe), a sipe extending zigzag in the length direction and extending straight in the depth direction (second sipe), and a sipe extending zigzag in the length direction and the depth direction (third sipe). In other words, the tire 2 can use a sipe extending zigzag in the length direction or the depth direction as the transverse sipe 102.

The transverse sipe 102 can function as an edge component that contributes to exertion of traction. The tire 2 can be further improved in wet performance. When the tread 4 is deformed, wall surfaces 102S of the transverse sipe 102 are in close contact with each other. The wall surfaces 102S restrain each other to enhance the stiffness of the tread 4 apparently. The tire 2 can also be further improved in wear resistance performance. From this viewpoint, at least one of the plurality of land portions 68 provided in the tread 4 preferably includes the transverse sipe 102 traversing the land portion 68, and the transverse sipe 102 preferably extends zigzag in the length direction or the depth direction. In this case, the size of the amplitude of the zigzag is preferably not less than 0.5 mm and not greater than 3.0 mm.

In FIG. 11, the length indicated by the double-pointed arrow DGs is the depth of the transverse sipe 102.

The transverse sipe 102 is preferably shallower than the circumferential narrow groove 78. Thus, an impact of the transverse sipe 102 on the stiffness of the land portion 68 is suppressed. The tire 2 can maintain good wear resistance performance while maintaining low rolling resistance. From this viewpoint, the ratio (DGs/D1) of the depth DGs of the transverse sipe 102 to the depth D1 of the circumferential narrow groove 78 is preferably not greater than 0.85. From the viewpoint that the transverse sipe 102 can effectively contribute to suppressing deterioration of wet performance caused by wear, the ratio (DGs/D1) is preferably not less than 0.30, and more preferably not less than 0.50.

In a case where the transverse sipe 102 is shallower than the circumferential narrow groove 78, the transverse sipe 102 preferably has a groove bottom 102T that is positioned radially inside the boundary LPE between the narrow groove portion 84 and the enlarged width portion 82 in the circumferential narrow groove 78 and positioned radially outside the maximum width position PX of the enlarged width portion 82. In other words, the groove bottom 102T of the transverse sipe 102 is preferably positioned between the boundary LPE between the narrow groove portion 84 and the enlarged width portion 82 and the maximum width position PX of the enlarged width portion 82 radially. Thus, in the tire 2, it is possible to suppress an impact on wear resistance performance and an impact on wet performance caused by transformation from the transverse sipe 102 to the enlarged width portion 82 of the circumferential narrow groove 78. The tire 2 can be further improved in wet performance while maintaining good wear resistance performance even in the middle stage of wear in which the narrow groove portion 84 disappears. The tire 2 can achieve both wet performance and wear resistance performance while maintaining low rolling resistance from the start of use until the tire 2 needs to be replaced with a next new tire 2.

In the tire 2, each of the center land portion 72 and the middle land portion 74 that are positioned between two circumferential main grooves 76 includes a plurality of transverse sipes 102 arranged circumferentially. The transverse sipe 102 may be provided only in the center land portion 72, or the transverse sipe 102 may be provided only in the middle land portion 74. From the viewpoint that the tire 2 can effectively achieve both wet performance and wear resistance performance while maintaining low rolling resistance, all of the plurality of land portions 68 positioned between two circumferential main grooves 76 preferably include a plurality of transverse sipes 102 arranged circumferentially.

The shoulder land portion 70 includes a lateral groove 104 extending between the shoulder circumferential groove 62 and the end TE of the tread surface 22. The lateral groove 104 is the above-described ordinary groove. The transverse sipe 102 may be carved on the shoulder land portion 70.

As is apparent from the above description, according to the present invention, the heavy duty tire 2 is obtained that is capable of achieving improvement in wet performance and wear resistance performance while maintaining low rolling resistance.

[Examples]

Hereinafter, the present invention will be described in more detail with reference to examples and the like, but the present invention is not limited to these examples.

Various chemicals used in Examples and Comparative Examples are described below.

NR: TSR20

SBR: HPR840 (S-SBR, Tg: -60°C, styrene content: 10% by mass, vinyl content: 42% by mole) manufactured by JSR Corporation

BR: UBEPOL BR (registered trademark) 150B (cis content: 97% by mole) manufactured by Ube Industries, Ltd.

Carbon black: DIABLACK N134 ($N_2SA$: 148 $m^2/g$, average primary particle diameter: 18 nm) manufactured by Mitsubishi Chemical Corporation
Silica: ULTRASIL 9100GR ($N_2SA$: 230 $m^2/g$, average primary particle diameter: 15 nm) manufactured by Evonik Degussa GmbH
Silane coupling agent: NXT (3-octanoylthiopropyltriethoxysilane) manufactured by Momentive Performance Materials Inc.
Resin component: Oppera PR-383 (hydrogenated DCPD/C9 resin, resin containing dicyclopentadiene, styrene, and indene as monomer components, softening point: 103°C) manufactured by Exxon Mobil Corporation
Wax: OZOACE-0355 manufactured by NIPPON SEIRO CO., LTD.
Antioxidant 1: NOCRAC 6C (N-(1,3-dimethylbutyl)-N'-phenyl-p-phenylenediamine) manufactured by OUCHI SHINKO CHEMICAL INDUSTRIAL CO., LTD.
Antioxidant 2: NOCRAC RD (poly(2,2,4-trimethyl-1,2-dihydroquinoline)) manufactured by OUCHI SHINKO CHEMICAL INDUSTRIAL CO., LTD.
Stearic acid: bead stearic acid, Tsubaki, manufactured by NOF Corporation
Zinc oxide: Zinc Oxide Type-1 manufactured by Mitsui Mining & Smelting Co., Ltd.
Sulfur: HK-200-5 (powdery sulfur containing 5% of oil) manufactured by Hosoi Chemical Industry Co., Ltd.
Vulcanization accelerator: NOCCELER NS (N-t-butyl-2-benzothiazole sulfenamide) manufactured by OUCHI SHINKO CHEMICAL INDUSTRIAL CO., LTD.

[Examples and Comparative Examples]

In accordance with each blending formula shown in Table 1, materials other than sulfur and a vulcanization accelerator are kneaded under a condition of 150°C for 5 minutes by using a 1.7-L Banbury mixer manufactured by Kobe Steel, Ltd. to obtain a kneaded product. Next, the sulfur and the vulcanization accelerator are added to the obtained kneaded product, and the mixture is kneaded under a condition of 80°C for 5 minutes by using an open roll to obtain a rubber composition (uncrosslinked rubber composition). The obtained rubber composition is molded into a tread and attached together with other parts such as sidewalls to form an unvulcanized tire. The unvulcanized tire is press-vulcanized under a condition of 150°C for 12 minutes to produce a test tire (size: 315/70R22.5, tire for trucks and buses) including the basic structure shown in FIG. 1. In the following Table 1, the character "Y" in the column of "S-JLB" shows that the test tire includes a reference full band and a material of a band cord in the reference full band is steel. The character "N" in the column of "S-JLB" shows that a reference full band is not provided, in other words, the reinforcing layer does not include a band.

[Wet Performance (WET)]

Wet performance (wet braking performance) is tested in accordance with R117-02 (ECE Regulation, No. 117, Revision 2) using a test vehicle described below. Test tires are mounted to all wheels of the test vehicle. As to wet performance, a braking distance that the test vehicle traveled on a wet road surface from the start of braking at a predetermined initial speed until the test vehicle stopped is measured.

Test vehicle: truck with a load capacity of 10 t (2-D vehicle)
Load: 75% of the standard load weight
Wet road surface: water depth of 0.5 to 2 mm
Speed: 65 km/h

The measured values of Example 1-3 and Comparative Example 1-3 are represented as indexes with that of Comparative Example 1 as 100 by the following equation.

(Wet performance index) = (braking distance of tire of Comparative Example 1)/(braking distance of each test tire) $\times$ 100

The results are shown in the cells for "WET" in Table 1 below. The higher the value is, the better the wet performance is.

[Wear Resistance Performance]

Test tires are mounted to all wheels of a 2-D test vehicle with a load of 10 ton with a rim (9.00 $\times$ 22.5) at an internal

pressure of 900 kPa. After running on the tire test course for 8000 km, the groove depth of the circumferential main groove is measured, and the running distance at which a decrease in the groove depth reaches 1 mm (hereinafter, referred to as the wear index value) is calculated.

The wear index values of Example 1-3 and Comparative Example 1-3 are represented as indexes with that of Comparative Example 1 as 100 by the following equation.

(Wear resistance performance index) = (wear index value of each test tire)/(wear index value of tire of Comparative Example 1) × 100

The results are shown in the cells for "Wear resistance performance" in Table 1 below. The higher the value is, the better the wear resistance performance is.

[Combined Performance]

The sum of the wet performance index and the wear resistance performance index is calculated. The results are shown in the cells for "Combined performance" in Table 1 below. The higher the value is, the better the wet performance and the wear resistance performance are.

[Table 1]

Table 1

| | Example 1 | Example 2 | Example 3 | Comparative Example 1 | Comparative Example 2 | Comparative Example 3 |
|---|---|---|---|---|---|---|
| Blending | | | | | | |
| NR | 60 | 50 | 40 | 10 | 80 | 60 |
| SBR | 40 | 50 | 60 | 80 | 20 | 40 |
| BR | - | - | - | 10 | - | - |
| CB | 25 | 25 | 25 | 25 | 25 | 25 |
| Silica | 40 | 35 | 30 | 20 | 10 | 40 |
| Coupling agent | 4 | 3.5 | 3 | 2 | 1 | 4 |
| Resin | 3 | 3 | 3 | 3 | 3 | 3 |
| Wax | 1.5 | 1.5 | 1.5 | 1.5 | 1.5 | 1.5 |
| Antioxidant 1 | 1 | 1 | 1 | 1 | 1 | 1 |
| Antioxidant 2 | 1 | 1 | 1 | 1 | 1 | 1 |
| Stearic acid | 3 | 3 | 3 | 3 | 3 | 3 |
| Zinc oxide | 3 | 3 | 3 | 3 | 3 | 3 |
| Sulfur | 1.5 | 1.5 | 1.5 | 1.5 | 1.5 | 1.5 |
| Vulcanization accelerator | 2 | 2 | 2 | 2 | 2 | 2 |
| CNR + BCB | 85 | 75 | 65 | 35 | 105 | 85 |
| S-JLB | Y | Y | Y | Y | Y | N |
| Wj/Wt | 0.75 | 0.75 | 0.75 | 0.75 | 0.75 | - |
| (CNR + BCB) × (Wj/Wt) | 63.8 | 56.3 | 48.8 | 26.3 | 78.8 | - |
| WET Performance | 140 | 135 | 130 | 100 | 60 | 130 |

(continued)

| | Example 1 | Example 2 | Example 3 | Comparative Example 1 | Comparative Example 2 | Comparative Example 3 |
|---|---|---|---|---|---|---|
| Wear resistance performance | 140 | 130 | 120 | 100 | 150 | 80 |
| Combined performance | 280 | 265 | 250 | 200 | 210 | 210 |

## INDUSTRIAL APPLICABILITY

The above-described technique that enables achievement of improvement in wet performance and wear resistance performance while maintaining low rolling resistance is applicable to various tires.

## REFERENCE SIGNS LIST

| | |
|---|---|
| 2 | tire |
| 4 | tread |
| 6 | sidewall |
| 10 | bead |
| 12 | carcass |
| 14 | reinforcing layer |
| 22 | tread surface |
| 26 | base portion |
| 28 | cap portion |
| 34 | carcass ply |
| 40 | belt |
| 42 | band |
| 44, 44A, 44B, 44C, 44D | belt ply |
| 46, 46A, 46B, 46C, 46D | belt cord |
| 50 | full band |
| 52 | band cord |
| 56 | band strip |
| 60 | circumferential groove |
| 68 | land portion |
| 76 | circumferential main groove |
| 78 | circumferential narrow groove |
| 80 | body portion |
| 82 | enlarged width portion |
| 84 | narrow groove portion |
| 102 | transverse sipe |

## Claims

**1.** A heavy duty tire comprising a pair of beads, a carcass that extends between the pair of beads, a tread that is positioned radially outside the carcass and is configured to come into contact with a road surface, and a reinforcing layer that is positioned radially between the tread and the carcass, wherein

the tread is formed from a rubber composition containing a rubber component and a filler,
the rubber component includes a styrene butadiene rubber and an isoprene-based rubber,
the filler includes carbon black and silica,
the reinforcing layer includes a belt having a plurality of belt cords arranged in parallel and a band having a band cord helically wound,
the band includes at least one full band composed of a band strip that is helically wound,
among the at least one full band, a full band having a widest axial width is defined as a reference full band,

a material of the band cord in the reference full band is steel,
an amount CSBR of the styrene butadiene rubber in 100 parts by mass of the rubber component is not less than 40 parts by mass,
an amount CNR of the isoprene-based rubber in 100 parts by mass of the rubber component is not less than 30 parts by mass,
an amount BCB of the carbon black per 100 parts by mass of the rubber component is smaller than an amount BSi of the silica per 100 parts by mass of the rubber component, and
the amount CNR of the isoprene-based rubber, the amount BCB of the carbon black, and a ratio (Wj/Wt) of an axial width Wj of the reference full band to an axial width Wt of the tread satisfy a following relational expression,

$$(CNR + BCB) \times (Wj/Wt) \geq 27.0$$

preferably, the amount CNR, the amount BCB, and a ratio (Wj/Wt) satisfy a following relational expression.

$$(CNR + BCB) \times (Wj/Wt) \geq 30.0$$

**2.** The heavy duty tire according to claim 1, wherein
the ratio (Wj/Wt) of the axial width Wj of the reference full band to the axial width Wt of the tread is not less than 0.60.

**3.** The heavy duty tire according to claim 1 or 2, wherein

the belt includes at least one belt ply,
among the at least one belt ply, a belt ply having a widest axial width is defined as a reference belt ply,
a material of the belt cord in the reference belt ply is steel, and
a ratio (Wb/Wt) of an axial width Wb of the reference belt ply to the axial width Wt of the tread is not less than 0.70.

**4.** The heavy duty tire according to claim 3, wherein
a ratio (Wj/Wb) of the axial width Wj of the reference full band to the axial width Wb of the reference belt ply is not less than 0.60.

**5.** The heavy duty tire according to claim 3 or 4, wherein
the reference full band and the reference belt ply are arranged to be directly adjacent to each other radially.

**6.** The heavy duty tire according to any one of claims 3 to 5, wherein
an inclination angle Aj of the band cord of the reference full band and an inclination angle Ab of the belt cord of the reference belt ply satisfy a following relational expression.

$$Aj + Ab \leq 25$$

**7.** The heavy duty tire according to any one of claims 1 to 6, wherein
a cord count Ej of the reference full band is not less than 20.

**8.** The heavy duty tire according to any one of claims 1 to 7, wherein

the tread includes a plurality of circumferential grooves that are axially arranged,
at least one of the plurality of circumferential grooves is a circumferential narrow groove,
the circumferential narrow groove includes a body portion including a groove opening of the circumferential narrow groove and includes an enlarged width portion including a groove bottom of the circumferential narrow groove,
the body portion includes a narrow groove portion, a maximum width of the enlarged width portion is larger than a minimum width of the narrow groove portion, and
when the tread is in contact with a road surface and deformed, a pair of wall surfaces of the circumferential narrow groove are in contact with each other in the narrow groove portion.

**9.** The heavy duty tire according to any one of claims 1 to 8, wherein

the tread includes a plurality of land portions separated by the plurality of circumferential grooves,
at least one of the plurality of land portions includes a transverse sipe traversing the land portion, and
the transverse sipe extends zigzag in a length direction or a depth direction.

**10.** The heavy duty tire according to any one of claims 1 to 9, wherein
the filler contains silica having an average primary particle diameter not greater than 16 nm.

**11.** The heavy duty tire according to any one of claims 1 to 10, wherein
the filler contains carbon black having an average primary particle diameter not greater than 19 nm.

**12.** The heavy duty tire according to any one of claims 1 to 11, wherein

the rubber composition further contains a silane coupling agent, and
the silane coupling agent contains a mercapto-based silane coupling agent.

**13.** The heavy duty tire according to any one of claims 1 to 12, wherein
the styrene butadiene rubber has a styrene content CSt of not greater than 25% by mass.

**14.** The heavy duty tire according to any one of claims 1 to 13, wherein
the rubber composition further contains a resin component.

**15.** The heavy duty tire according to any one of claims 1 to 13, wherein
the product (CNR + BCB) $\times$ (Wj/Wt) of the sum (CNR + BCB) of the amount CNR and the amount BCB and the ratio (Wj/Wt) is not greater than 120.0, preferably not greater than 110.0, more preferably not greater than 100.0, still more preferably not greater than 90.0, still more preferably not greater than 80.0, and still more preferably not greater than 70.0.

FIG. 1

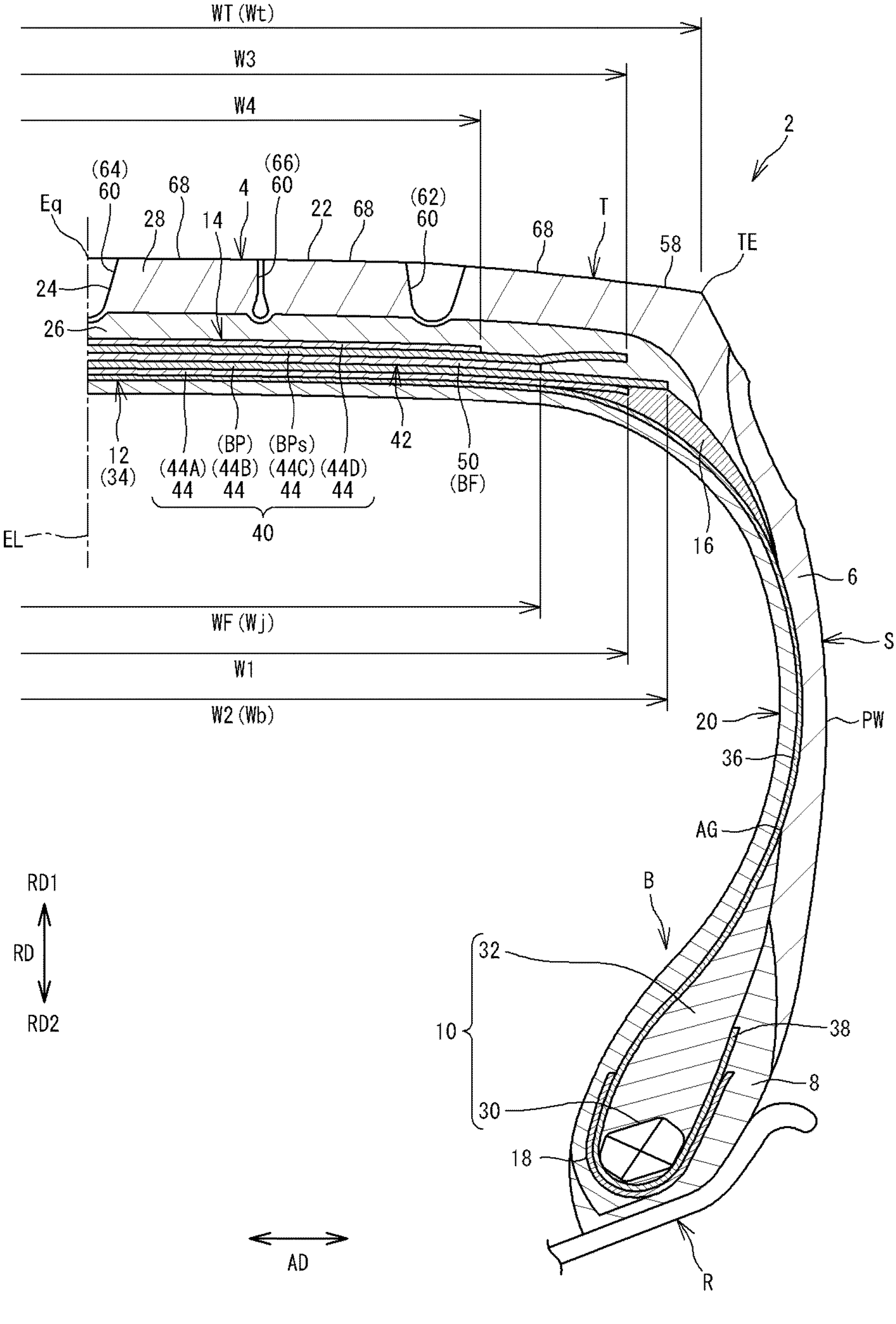
WT (Wt)
W3
W4
2
(64)
60
(66)
60
Eq
68
4
22
68
(62)
60
28
14
68
T
58
TE
24
26
(BP)
(BPs)
42
50
(BF)
12
(34)
(44A)
44
(44B)
44
(44C)
44
(44D)
44
40
16
6
EL
WF (Wj)
W1
S
W2 (Wb)
20
PW
36
AG
RD1
RD
RD2
B
32
10
38
8
30
18
AD
R

FIG. 2

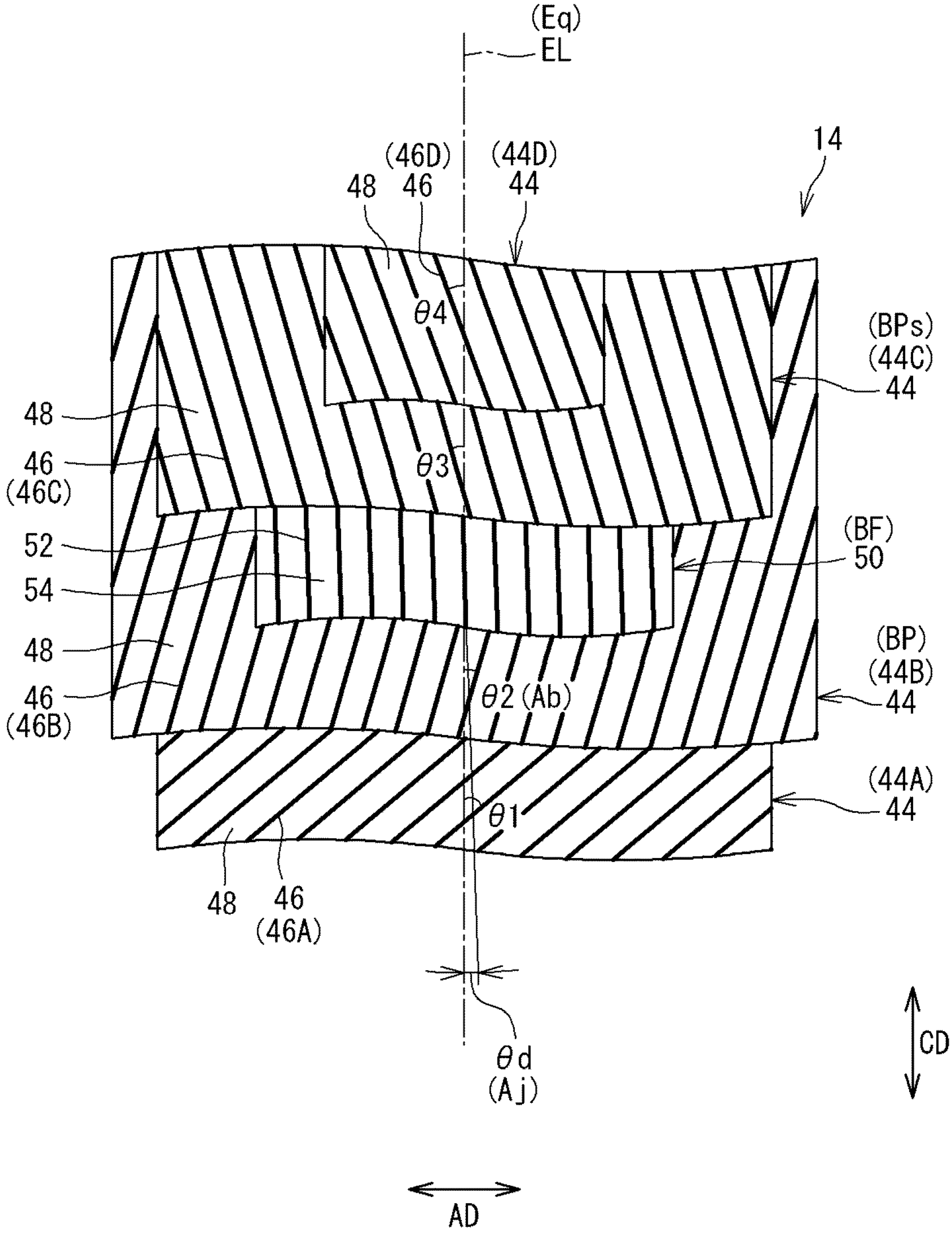
(Eq)
EL
14
(46D)
46
48
(44D)
44
θ4
(BPs)
(44C)
44
48
46
(46C)
θ3
52
54
(BF)
50
48
46
(46B)
θ2 (Ab)
(BP)
(44B)
44
(44A)
44
θ1
48
46
(46A)
θd
(Aj)
CD
AD

FIG. 3

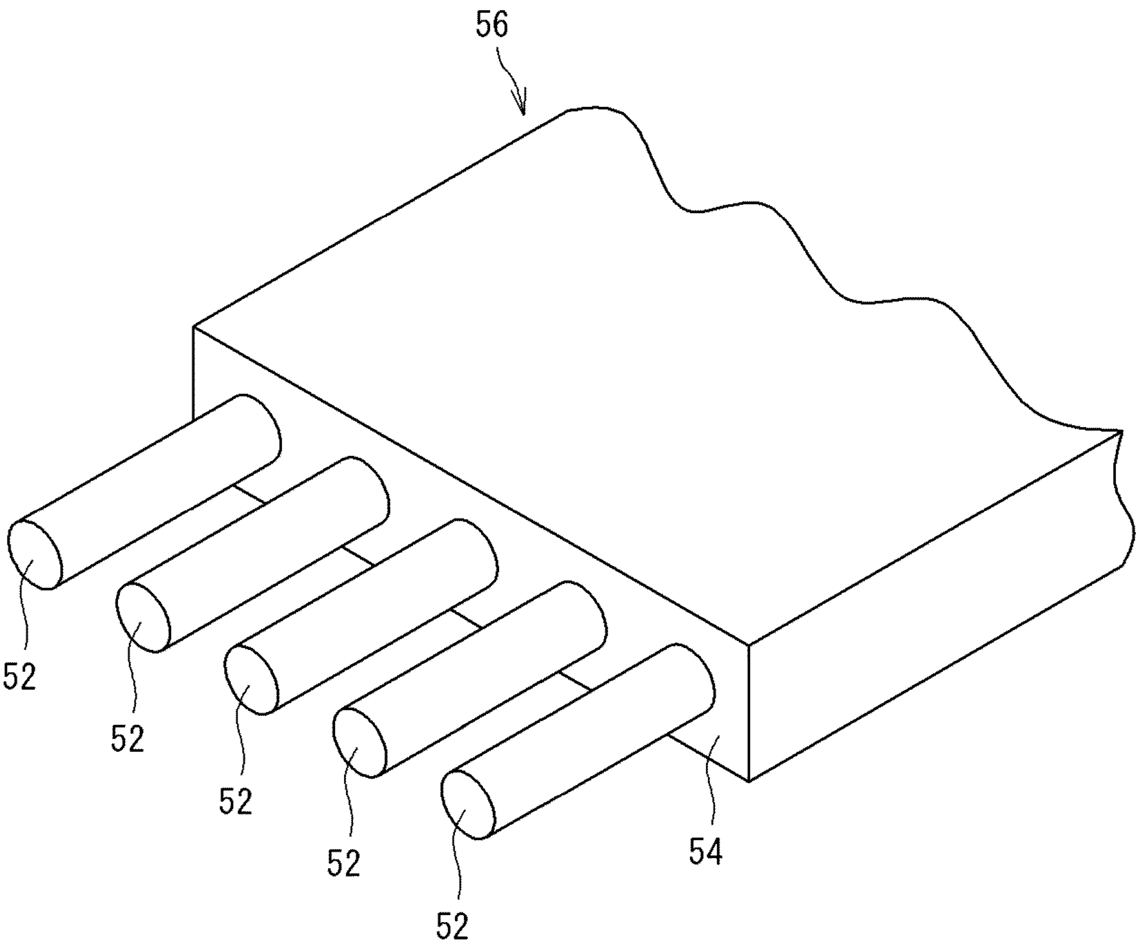

FIG. 4

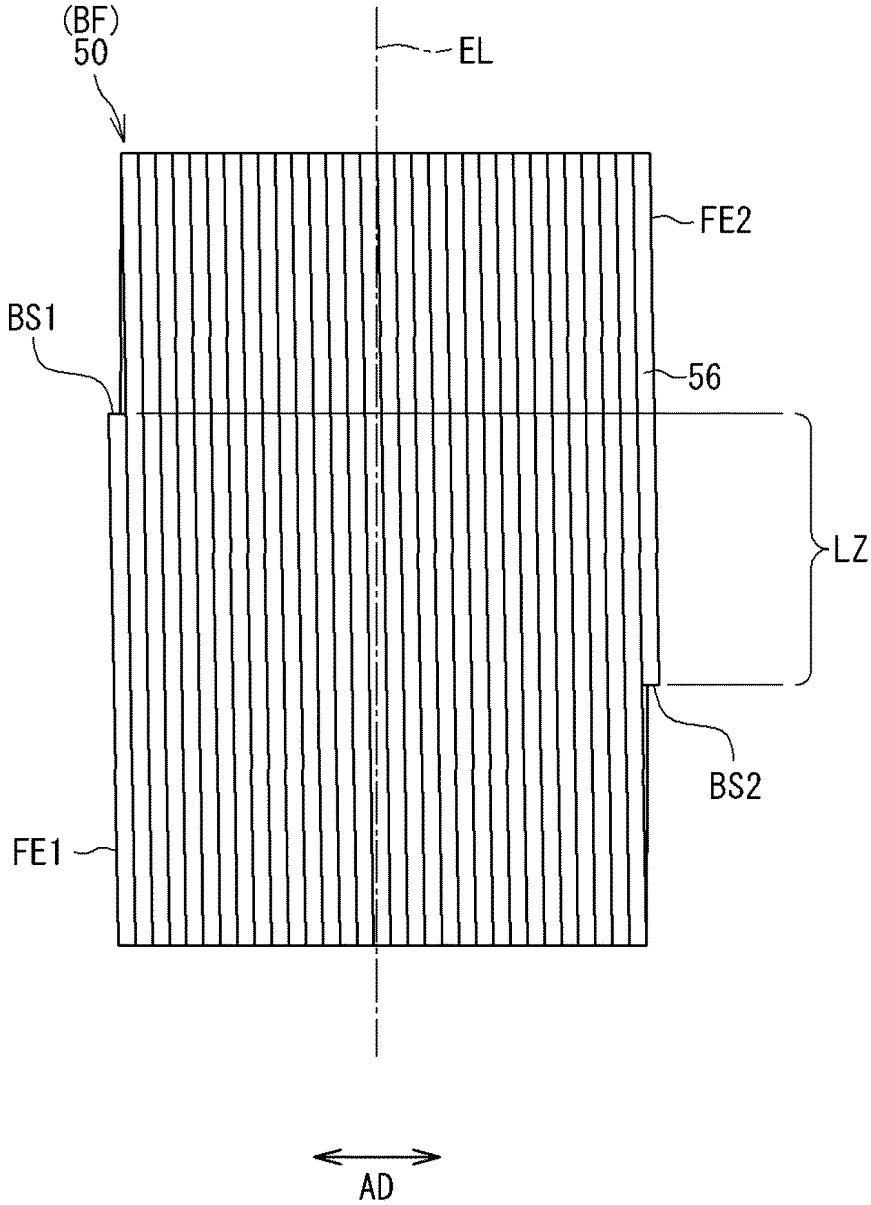

FIG. 5

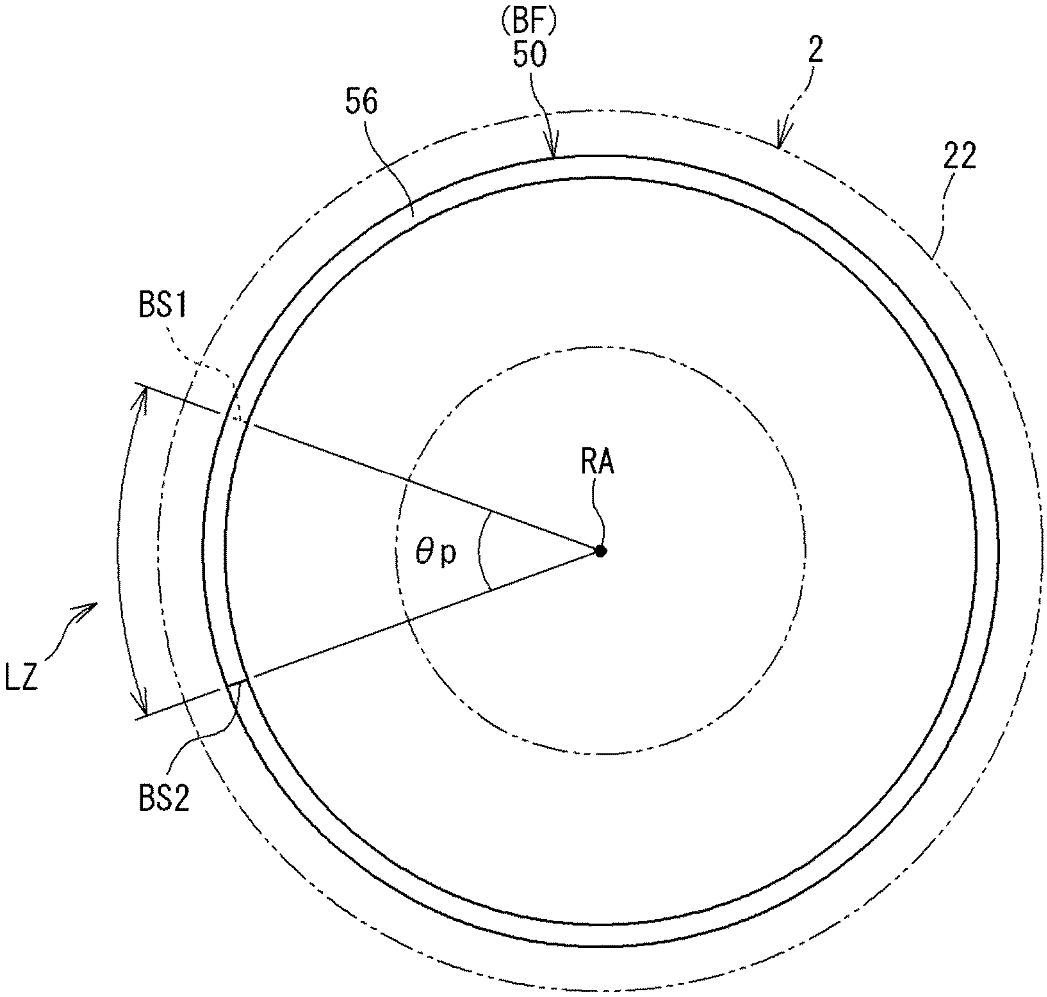

FIG. 6

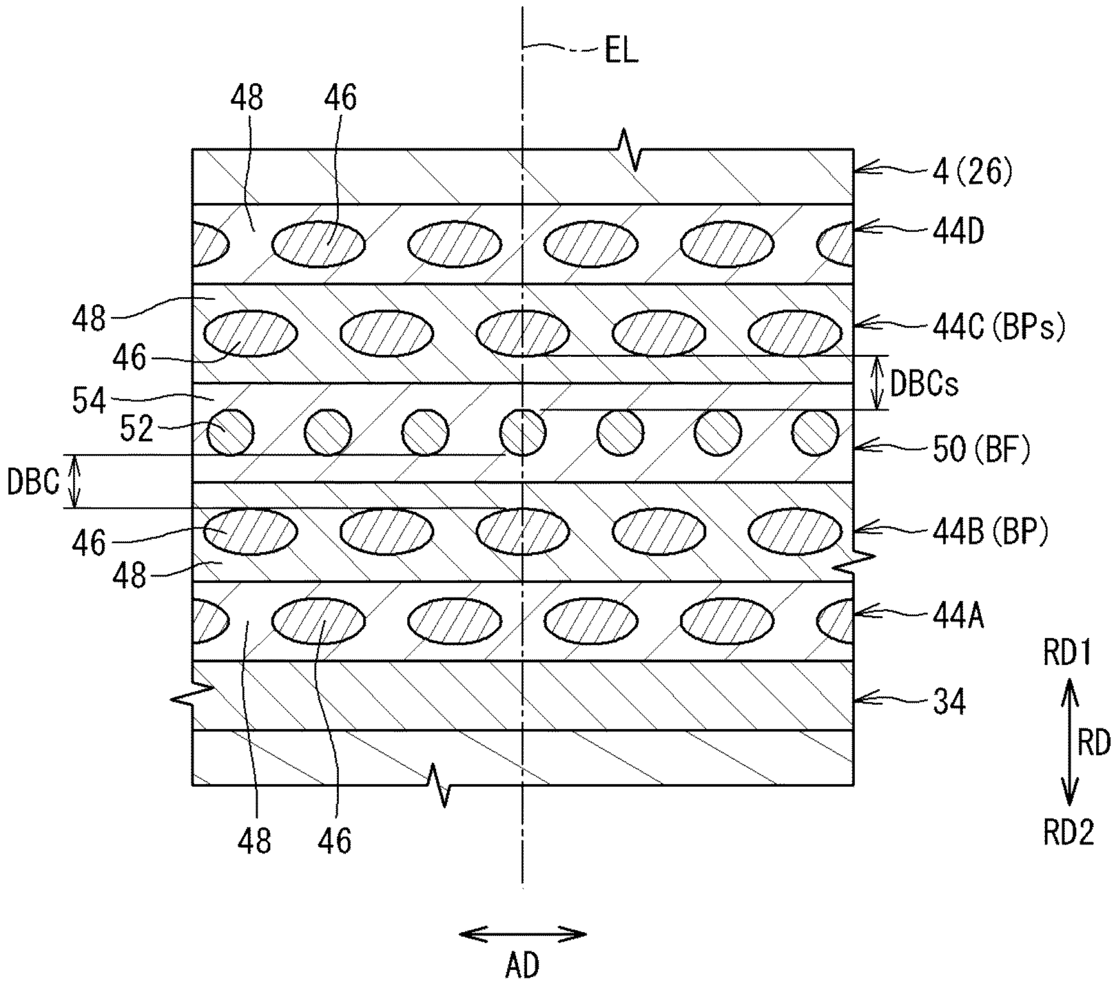
EL
48
46
4 (26)
44D
48
44C (BPs)
46
DBCs
54
52
50 (BF)
DBC
46
44B (BP)
48
44A
RD1
34
RD
RD2
48
46
AD

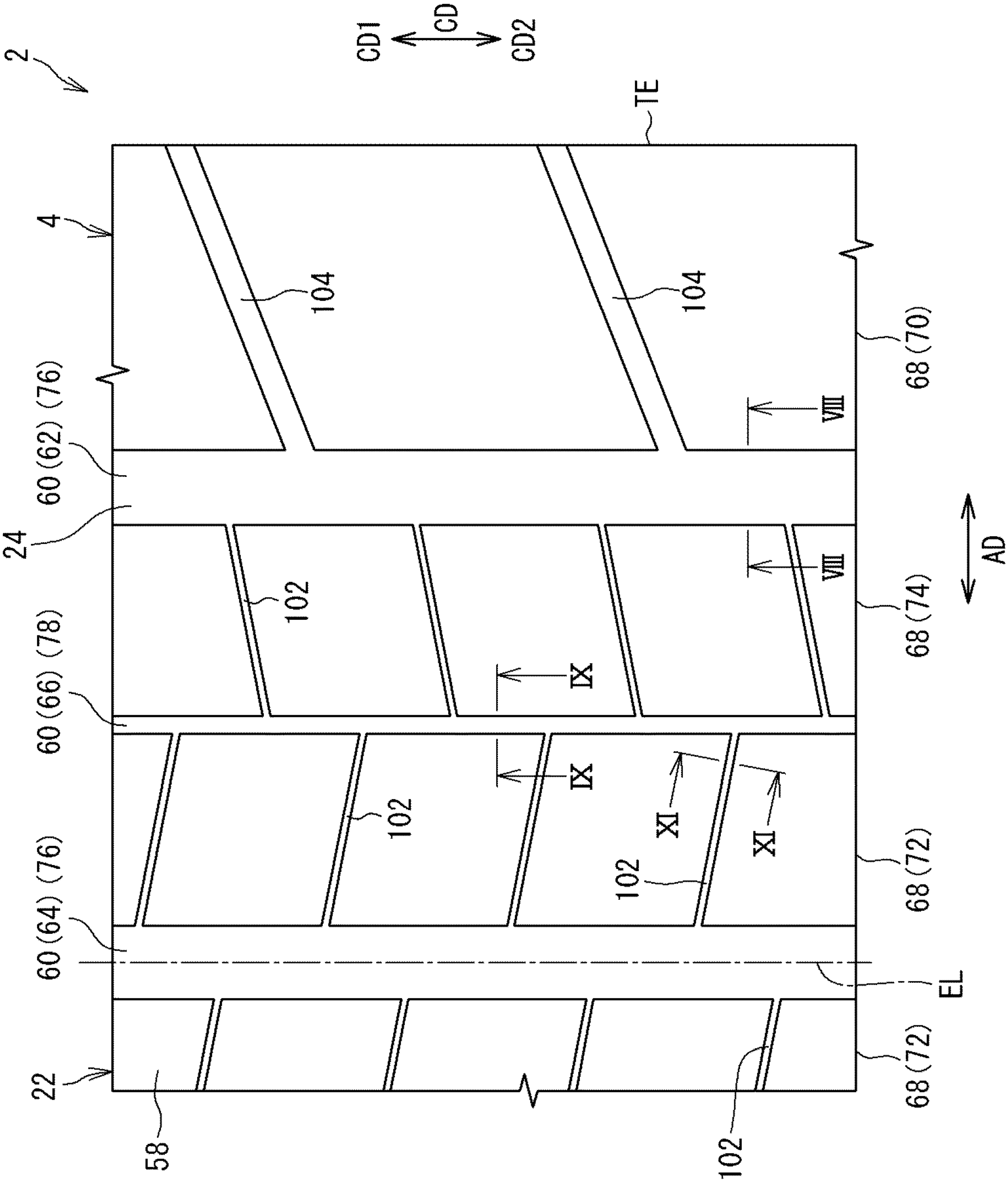
2
CD1
CD
CD2
TE
4
104
104
68 (70)
60 (62) (76)
VIII
VIII
24
102
AD
68 (74)
60 (66) (78)
IX
IX
102
XI
XI
102
68 (72)
60 (64) (76)
EL
22
68 (72)
58
102

FIG. 7

FIG. 8

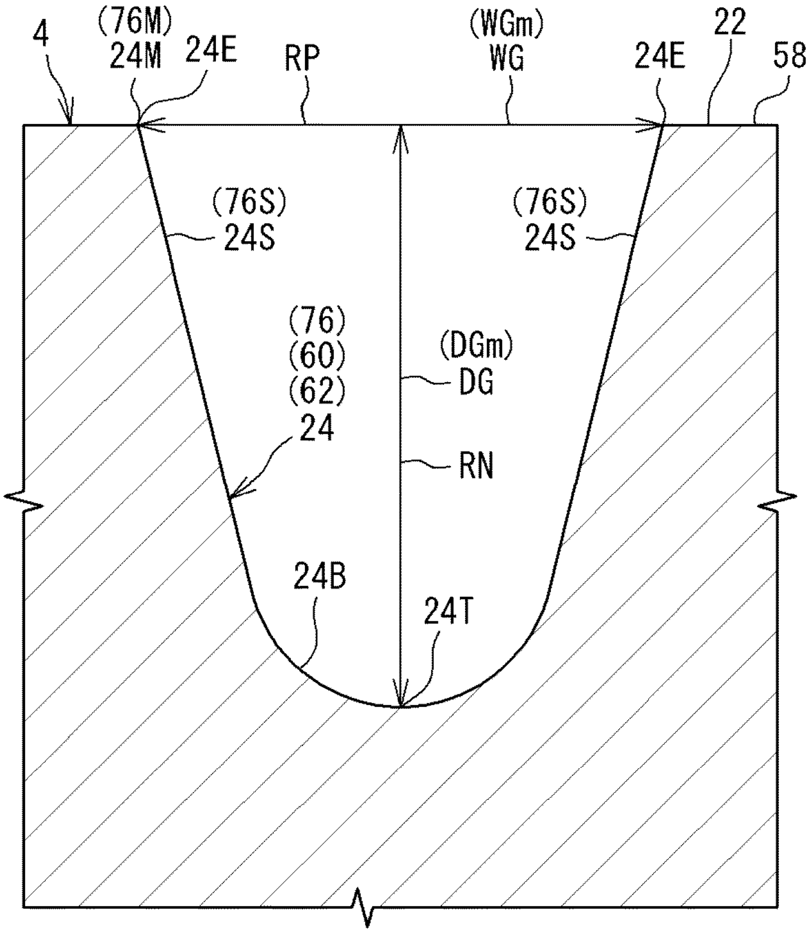
4
(76M)
24M
24E
RP
(WGm)
WG
24E
22
58
(76S)
24S
(76S)
24S
(76)
(60)
(62)
24
(DGm)
DG
RN
24B
24T

FIG. 9

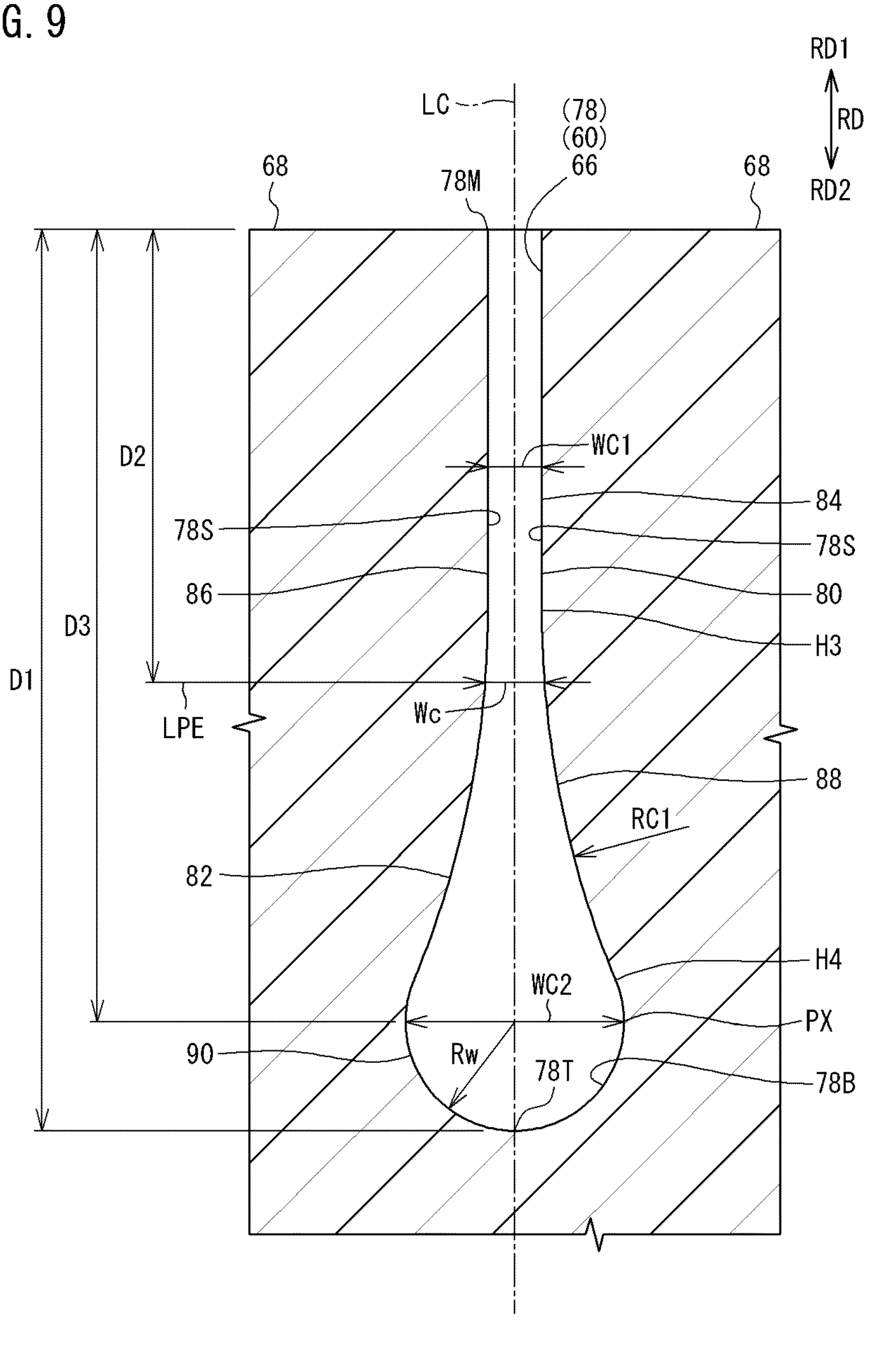
RD1
RD
RD2
LC
(78)
(60)
66
68
78M
68
D2
D3
D1
WC1
84
78S
78S
86
80
H3
LPE
Wc
88
RC1
82
H4
WC2
PX
90
Rw
78T
78B

FIG. 10

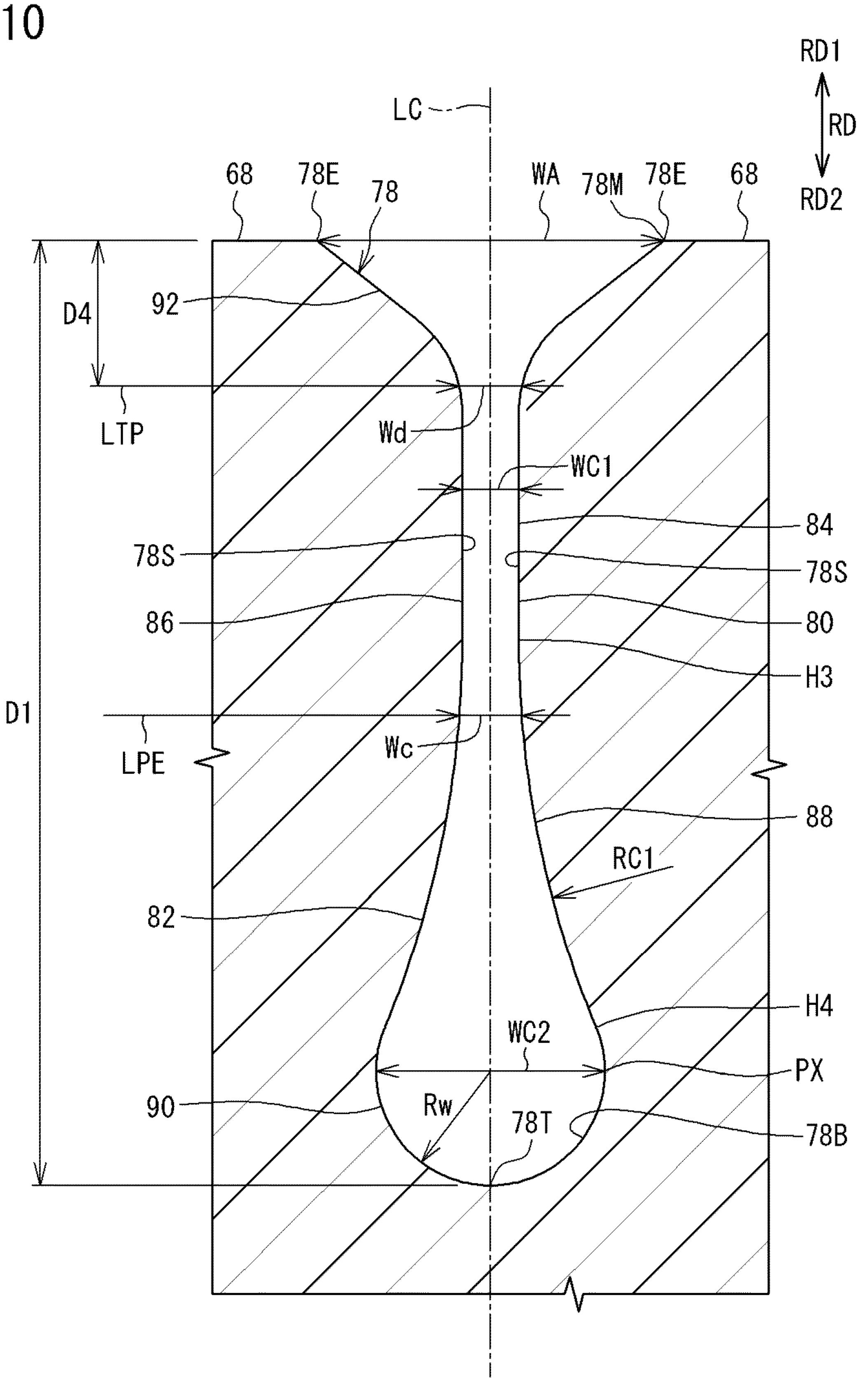
RD1
RD
RD2
LC
68
78E
78
WA
78M
78E
68
92
D4
LTP
Wd
WC1
84
78S
78S
86
80
H3
D1
LPE
Wc
88
RC1
82
H4
WC2
PX
90
Rw
78T
78B

FIG. 11

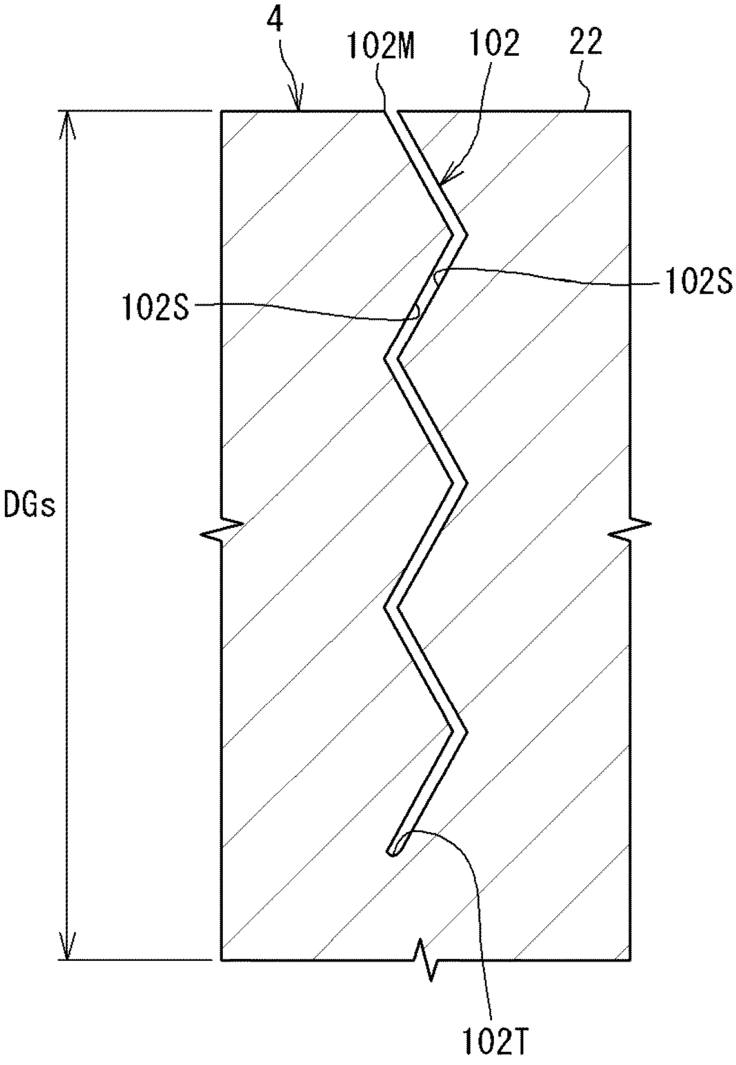

FIG. 12

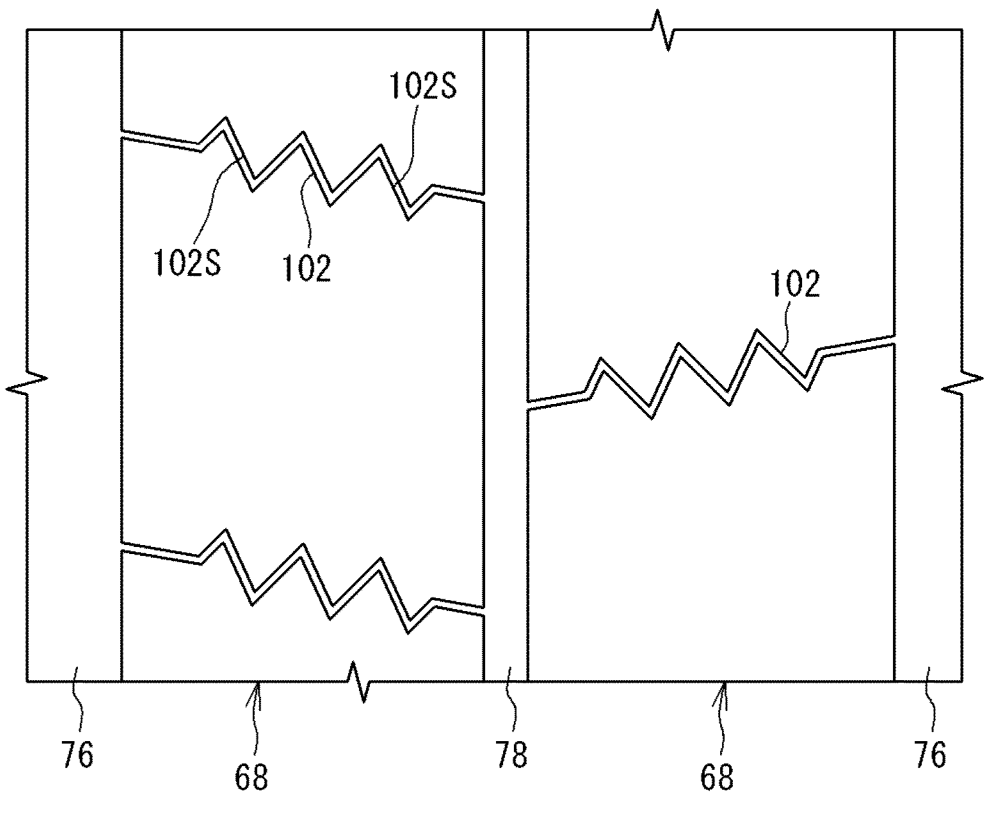

Europäisches Patentamt
European Patent Office
Office européen des brevets

# EUROPEAN SEARCH REPORT

Application Number
EP 25 22 0719

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 795 377 A1 (SUMITOMO RUBBER IND [JP]) 24 March 2021 (2021-03-24) * paragraphs [0034] - [0040], [0077], [0082], [0084]; claims 1-3; figure 1; table 1 * ----- | 1-15 | INV. B60C1/00 B60C9/20 B60C9/28 B60C11/03 B60C11/12 B60C11/13 B60C9/22 |
| Y | JP 2023 013934 A (SUMITOMO RUBBER IND) 26 January 2023 (2023-01-26) * paragraphs [0048], [0057], [0075], [0082], [0089], [0092], [0095], [0099] - [0101], [0127], [0128]; claims 1-5; figures 1-4; table 1 * ----- | 1-15 | |
| Y | EP 4 140 767 A1 (SUMITOMO RUBBER IND [JP]) 1 March 2023 (2023-03-01) * paragraphs [0003] - [0009], [0070], [0085], [0086], [0151] - [0154]; claims 1-8; figures 1-4 * ----- | 1-15 | |
| Y | WO 2019/016461 A1 (MICHELIN & CIE [FR]) 24 January 2019 (2019-01-24) * paragraphs [0001], [0090], [0099]; claims 1-14; figure 1 * ----- | 1-15 | TECHNICAL FIELDS SEARCHED (IPC) B60C |

The present search report has been drawn up for all claims

| Place of search | Date of completion of the search | Examiner |
|---|---|---|
| Munich | 20 May 2026 | Carneiro, Joaquim |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 22 0719

This annex lists the patent family members relating to the patent documents cited in the above-mentioned European search report. The members are as contained in the European Patent Office EDP file on
The European Patent Office is in no way liable for these particulars which are merely given for the purpose of information.

20-05-2026

| Patent document cited in search report | | Publication date | Patent family member(s) | | | Publication date |
|---|---|---|---|---|---|---|
| EP 3795377 | A1 | 24-03-2021 | EP | 3795377 | A1 | 24-03-2021 |
| | | | JP | 7338348 | B2 | 05-09-2023 |
| | | | JP | 2021046504 | A | 25-03-2021 |
| JP 2023013934 | A | 26-01-2023 | JP | 7859160 | B2 | 15-05-2026 |
| | | | JP | 2023013934 | A | 26-01-2023 |
| EP 4140767 | A1 | 01-03-2023 | NONE | | | |
| WO 2019016461 | A1 | 24-01-2019 | CA | 3064954 | A1 | 24-01-2019 |
| | | | CN | 110944850 | A | 31-03-2020 |
| | | | EP | 3655260 | A1 | 27-05-2020 |
| | | | FR | 3069190 | A1 | 25-01-2019 |
| | | | WO | 2019016461 | A1 | 24-01-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2025002779 A
- JP 2023013934 A
- EP 3427975 A
- JP 6856781 B
- EP 3173251 A
- JP 2009002594 A


### Non-patent literature cited in the description


- *Rubber Chemistry and Technology*, 2012, vol. 85 (3), 408-449
- A Comparison of Surface Morphology And Chemistry of Pyrolytic Carbon Blacks with Commercial Carbon Blacks. *Powder Technology*, 2005, vol. 160, 190-193
- *Akita Prefectural University Web Journal B*, 2019, vol. 6, 216-222